# EUROPEAN PATENT APPLICATION

(11) **EP 4 848 454 A1**
(43) Date of publication of application: **02.12.2026**
(21) Application number: 26178675.0
(22) Date of filing: 13.05.2026
(51) Int. Cl.: H01M 50/44, H01M 10/0525, H01M 50/46, H01M 50/446

(54) **ELECTRODE FOR RECHARGEABLE LITHIUM BATTERY AND RECHARGEABLE LITHIUM BATTERY INCLUDING THE SAME**

(30) Priority: 16.05.2025 KR 20250064099; 16.05.2025 KR 20250064101; 16.05.2025 KR 20250064098; 16.05.2025 KR 20250064100
(71) Applicant: SAMSUNG SDI CO., LTD., Yongin-si, Gyeonggi-do 17084 (KR)
(72) Inventor: YANG, Ho Sung, 16678 Gyeonggi-do (KR); YOU, Duck Jae, 16678 Gyeonggi-do (KR); PARK, Chang Won, 16678 Gyeonggi-do (KR); WOO, Ji Ye, 16678 Gyeonggi-do (KR); YUK, Seo Yeon, 16678 Gyeonggi-do (KR); LEE, Dong Geun, 16678 Gyeonggi-do (KR); LEE, Kyu Min, 16678 Gyeonggi-do (KR)
(74) Representative: Michalski Hüttermann & Partner mbB

(57) **Abstract**

Provided are an electrode for a rechargeable lithium battery and a rechargeable lithium battery including the same. The electrode for a rechargeable lithium battery includes an active material layer for a rechargeable lithium battery; and an organic-inorganic composite layer integrated with the active material layer, and the organic-inorganic composite layer includes fibers containing poly(silsesquioxane) with crosslinkable functional groups.

## Description

### BACKGROUND

### 1. Technical Field

The present disclosure relates to an electrode for a rechargeable lithium battery, and a rechargeable lithium battery including the same.

### 2. Discussion of Related Art

Recently, with the rapid spread of electronic devices using batteries, such as mobile phones, notebook computers, and electric vehicles, the demand for secondary batteries having high energy density and high capacity is rapidly increasing. Therefore, research and development for improving the performance of rechargeable lithium batteries is actively being conducted.

A rechargeable lithium battery is a battery including a positive electrode and a negative electrode that contain an active material capable of the intercalation and deintercalation of lithium ions and produces electrical energy by oxidation and reduction reactions when the lithium ions are intercalated into and deintercalated from the positive electrode and the negative electrode.

### SUMMARY

The present disclosure is directed to providing an electrode for a rechargeable lithium battery including an organic-inorganic composite layer which is integrated with an active material layer and has improved tensile strength and improved air permeability.

The present disclosure is also directed to providing an electrode for a rechargeable lithium battery including an organic-inorganic composite layer which is integrated with an active material layer and has improved tensile strength and improved adhesion.

The present disclosure is also directed to providing an electrode for a rechargeable lithium battery including an organic-inorganic composite layer which is integrated with an active material layer and has excellent electrolyte wettability.

The present disclosure is also directed to providing an electrode for a rechargeable lithium battery including an organic-inorganic composite layer which is integrated with an active material layer and has stability against foreign substances.

The present disclosure is also directed to providing electrode for a rechargeable lithium battery including an organic-inorganic composite layer which is integrated with an active material layer and provides improved tensile strength, improved electrolyte wettability, and a shutdown effect.

The present disclosure is also directed to providing an electrode for a rechargeable lithium battery including an organic-inorganic composite layer which is integrated with an active material layer and has improved adhesion to an active material layer and improved heat resistance.

The present disclosure is also directed to providing a rechargeable lithium battery, which includes the electrode for a rechargeable lithium battery.

One embodiment provides an electrode for a rechargeable lithium battery.

The electrode for a rechargeable lithium battery includes an active material layer for a rechargeable lithium battery; and an organic-inorganic composite layer integrated with the active material layer, and the organic-inorganic composite layer includes a fiber containing poly(silsesquioxane) (PSSQ) with crosslinkable functional groups.

The electrode for a rechargeable lithium battery includes an active material layer for a rechargeable lithium battery; and an organic-inorganic composite layer integrated with the active material layer, wherein the organic-inorganic composite layer includes a fiber that contains PSSQ with crosslinkable functional groups and an aramid-based polymer.

The electrode for a rechargeable lithium battery includes an active material layer for a rechargeable lithium battery; and a multilayer organic-inorganic composite layer integrated with the active material layer for a rechargeable lithium battery, wherein the multilayer organic-inorganic composite layer includes a first organic-inorganic composite layer, and a second organic-inorganic composite layer. The difference between the content of PSSQ in the first organic-inorganic composite layer and the content of PSSQ in the second organic-inorganic composite layer is 10 wt% or more.

Another embodiment provides an electrode assembly for a rechargeable lithium battery.

The electrode assembly for a rechargeable lithium battery includes a positive electrode active material layer for a rechargeable lithium battery, a negative electrode active material layer for a rechargeable lithium battery, and the multilayer organic-inorganic composite layer located between the positive electrode active material layer for a rechargeable lithium battery and the negative electrode active material layer for a rechargeable lithium battery.
1. An electrode for a rechargeable lithium battery, comprising:
   an active material layer for a rechargeable lithium battery; and an organic-inorganic composite layer integrated with the active material layer,
   wherein the organic-inorganic composite layer comprises fibers containing poly(silsesquioxane)(PSSQ) with crosslinkable functional groups.
2. The electrode of claim 1, wherein at least some of the crosslinkable functional groups in the fibers are crosslinked with each other.
3. The electrode of claims 1-2, wherein the crosslinkable functional groups are one or more of a (meth)acryl group, a (meth)acryloxy group, and a (meth)acryloxyalkyl group.
4. The electrode of claims 1-3, wherein the PSSQ with crosslinkable functional groups further has a substituted or unsubstituted aromatic group.
5. The electrode of claims 1-4, wherein the PSSQ with crosslinkable functional groups comprises a random type, a ladder type, a cage type, or a partial cage type.
6. The electrode of claims 1-5, wherein the PSSQ is a ladder type and represented by Chemical Formula 3 below: 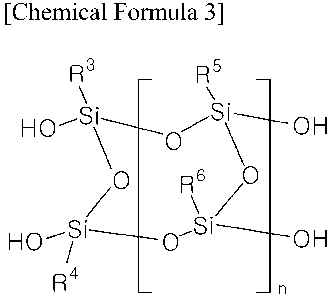 (In Chemical Formula 3,
   R³, R⁴, R⁵, and R⁶ are each independently hydrogen, a hydroxyl group, a C1 to C20 alkyl group, a C2 to C20 alkenyl group, a C2 to C20 alkynyl group, a C3 to C20 cycloalkyl group, a C6 to C20 aryl group, a C7 to C20 arylalkyl group, a crosslinkable functional group, or a combination thereof,
   at least one of R³, R⁴, R⁵, and R⁶ comprisesa crosslinkable functional group, and
   n is the number of moles of the above unit).
7. The electrode of claim 6, wherein, in Chemical Formula 3, R³, R⁴, R⁵, and R⁶ are each independently a phenyl group or a (meth)acryl group, and at least one of R³, R⁴, R⁵, and R⁶ comprises a (meth)acryl group.
8. The electrode of claims 1-7, wherein the PSSQ with crosslinkable functional groups are included at a range of 10 to 100 wt% of the fibers.
9. The electrode of claims 1-8, wherein the fibers further comprise a polymer, and the polymer includes polyvinylidene fluoride (PVDF), polyacrylonitrile (PAN), polyamideimide (PAI), polyvinylpyrrolidone (PVP), polyacrylic acid (PAA), polyvinyl alcohol (PVA), aramid, or a combination thereof.
10. The electrode of claim 9, wherein the polymer comprises a mixture of PVDF and PAN.
11. The electrode of claims 1-10, wherein the PVDF and the PAN are included in a range of 10 to 90 parts by weight:10 to 90 parts by weight with respect to 100 parts by weight of the mixture.
12. The electrode of claims 1-11, wherein the fibers comprise 10 to 50 parts by weight of the PSSQ with respect to 100 parts by weight of the polymer.
13. The electrode of claims 1-12, wherein the PSSQ has a weight average molecular weight in a range of 2,000 to 100,000 g/mol.
14. The electrode of claims 1-13, wherein the active material layer for a rechargeable lithium battery comprises a positive electrode active material layer.
15. The electrode of claims 1-14, wherein the fibers further comprise an aramid-based polymer.
16. The electrode of claims 1-15, wherein the PSSQ with crosslinkable functional groups and the aramid-based polymer are included in the fibers at a weight ratio in a range of 1:1 to 20:1.
17. The electrode of claims 1-16, wherein the fibers further comprise a polymer, and the polymer includes polyvinylidene fluoride (PVDF), polyacrylonitrile (PAN), polyamideimide (PAI), polyvinylpyrrolidone (PVP), polyacrylic acid (PAA), polyvinyl alcohol (PVA), or a combination thereof.
18. The electrode of claim 1-17, wherein the polymer comprises a mixture of PVDF and PAN.
19. The electrode of claims 1-18, wherein the PVDF and the PAN are included in a range of 10 to 90 parts by weight:10 to 90 parts by weight with respect to 100 parts by weight of the mixture.
20. The electrode of claims 1-19, wherein the fibers comprise 100 parts by weight of the polymer 1 to 40 parts by weight of the PSSQ, and 0.1 to 30 parts by weight of the aramid-based polymer with respect to 100 parts by weight of the polymer.
21. An electrode for a rechargeable lithium battery, comprising:
   an active material layer for a rechargeable lithium battery; and
   an organic-inorganic composite layer integrated with the active material layer,
   wherein the organic-inorganic composite layer comprises fibers containing a polyvinylidene fluoride (PVDF)-based polymer, a polyacrylonitrile (PAN)-based polymer, and poly(silsesquioxane) (PSSQ).
22. The electrode of claim 21, wherein the fibers are sea-island fibers.
23. The electrode of claim 21-22, wherein the sea-island fiber has a sea region consisting of the PVDF-based polymer and island regions with a core-shell structure which has a core consisting of the PAN-based polymer and a shell surrounding the core and consisting of the PSSQ.
24. The electrode of claims 21-23, wherein, in the sea-island fiber, the island regions are randomly disposed in the sea region.
25.The electrode of claims 2-24, wherein the area ratio of the island regions in the cross-section of the sea-island fiber is 30 to 50%.
26. The electrode of claims 21-25, wherein the PSSQ has a substituted or unsubstituted aromatic group.
27. The electrode of claims 21-26, wherein the PSSQ has crosslinkable functional groups.
28. The electrode of claims 21-27, wherein at least some of the crosslinkable functional groups in the fibers are crosslinked with each other.
29. The electrode of claims 21-28, wherein the crosslinkable functional group comprises one or more of an epoxy group, a glycidyl group, and a glycidoxyalkyl group.
30. The electrode of claims 21-29, wherein the PSSQ comprises a random type, a ladder type, a cage type, or a partial cage type.
31. The electrode of claims 21-30, wherein the PSSQ is a ladder type and represented by Chemical Formula 8 below: 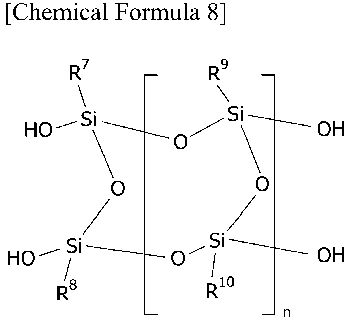 (In Chemical Formula 8,
   R⁷, R⁸, R⁹, and R¹⁰ are each independently hydrogen, a hydroxyl group, a C1 to C20 alkyl group, a C2 to C20 alkenyl group, a C2 to C20 alkynyl group, a C3 to C20 cycloalkyl group, a C6 to C20 aryl group, a C7 to C20 arylalkyl group, a crosslinkable functional group, or a combination thereof,
   at least one of R⁷, R⁸, R⁹, and R¹⁰ comprises a crosslinkable functional group, and
   n is the number of moles of the unit).
32. The electrode of claims 21-31, wherein, in Chemical Formula 8, R⁷, R⁸, R⁹, and R¹⁰ are each independently a phenyl group, an epoxy group, a glycidyl group, a glycidoxy group, or a glycidoxyalkyl group, and at least one of R⁷, R⁸, R⁹, and R¹⁰ comprises an epoxy group, a glycidyl group, a glycidoxy group, or a glycidoxyalkyl group.
33. The electrode of claims 21-32, wherein the PVDF-based polymer and the PAN-based polymer are included in a range of 50 to 90 parts by weight:10 to 50 parts by weight with respect to 100 parts by weight of a total of the PVDF-based polymer and the PAN-based polymer.
34. The electrode of claims 21-33, wherein the PSSQ is included in a range of 5 to 50 parts by weight with respect to 100 parts by weight of the total of the PVDF-based polymer and the PAN-based polymer.
35. The electrode of claims 21-34, wherein the active material layer for a rechargeable lithium battery comprises a negative electrode active material layer.
36. An electrode for a rechargeable lithium battery, comprising:
   an active material layer for a rechargeable lithium battery; and
   a multilayer organic-inorganic composite layer integrated with the active material layer for a rechargeable lithium battery,
   wherein the multilayer organic-inorganic composite layer comprises a first organic-inorganic composite layer and a second organic-inorganic composite layer, and
   the difference in poly(silsesquioxane) (PSSQ) content between the first organic-inorganic composite layer and the second organic-inorganic composite layer is 10 wt% or more.
37. The electrode of claim 36, wherein the multilayer organic-inorganic composite layer has a total of 2 to 8 first and second organic-inorganic composite layers.
38. The electrode of claims 36-37, wherein the first organic-inorganic composite layer has a higher PSSQ content than the second organic-inorganic composite layer.
39. The electrode of claims 36-38, wherein the second organic-inorganic composite layer is integrated with the active material layer for a rechargeable lithium battery, and the active material layer for a rechargeable lithium battery is a negative electrode active material layer.
40. The electrode of claims 36-39, wherein the PSSQ of the first organic-inorganic composite layer is included at an amount of 10 wt% or more, and the PSSQ of the first organic-inorganic composite layer is included at an amount of 0 wt% or more.
41. The electrode of claims 36-40, wherein the first organic-inorganic composite layer and the second organic-inorganic composite layer are alternately stacked.
42. The electrode of claims 36-41, wherein the PSSQ content of the multilayer organic-inorganic composite layer is provided in a range of 10 to 30 wt% with respect to 100 parts by weight of the polymer.
43. The electrode of claims 36-42, wherein the multilayer organic-inorganic composite layer has a thickness in a range of 0.5 to 20 µm.
44. The electrode of claims 36-43, wherein the PSSQ has a substituted or unsubstituted aromatic group.
45. The electrode of claims 36-44, wherein the PSSQ has a crosslinkable functional group.
46. The electrode of claims 36-45, wherein the crosslinkable functional group includes one or more of a (meth)acryl group, a (meth)acryloxy group, a (meth)acryloxylalkyl group, an epoxy group, a glycidyl group, a glycidoxy group, and a glycidoxyalkyl group.
47. The electrode of claims 36-46, wherein the PSSQ comprises a ladder type and represented by Chemical Formula 8 below: 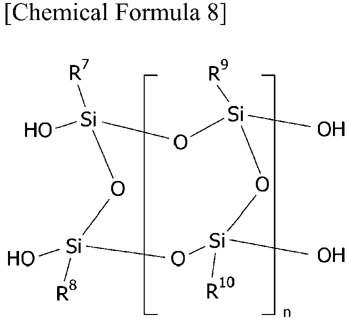 (In Chemical Formula 8,
   R⁷, R⁸, R⁹, and R¹⁰ are each independently hydrogen, a hydroxyl group, a C1 to C20 alkyl group, a C2 to C20 alkenyl group, a C2 to C20 alkynyl group, a C3 to C20 cycloalkyl group, a C6 to C20 aryl group, a C7 to C20 arylalkyl group, a crosslinkable functional group, or a combination thereof,
   at least one of R⁷, R⁸, R⁹, and R¹⁰ comprises a crosslinkable functional group, and
   n is the number of moles of the unit).
48. The electrode of claims 36-47, wherein at least one of the first organic-inorganic composite layer and the second organic-inorganic composite layer comprises fibers containing the PSSQ.
49. The electrode of claims 36-48, wherein the fibers containing the PSSQ further comprise a polyvinylidene fluoride (PVDF)-based polymer and a polyacrylonitrile (PAN)-based polymer.
50. The electrode of claims 36-49, wherein the fibers are sea-island fibers.
51. The electrode of claims 36-50, wherein the sea-island fibers have a sea region consisting of the PVDF-based polymer, and island regions with a core-shell structure which has a core consisting of the PAN-based polymer and a shell surrounding the core and consisting of the PSSQ.
52. The electrode of claims 36-51, wherein the PVDF-based polymer and the PAN-based polymer are included in a range of 50 to 90 parts by weight:10 to 50 parts by weight with respect to 100 parts by weight of a total of the PVDF-based polymer and the PAN-based polymer.
53. The electrode of claims 36-52, wherein the PSSQ is included in a range of 5 to 50 parts by weight with respect to 100 parts by weight of the total of the PVDF-based polymer and the PAN-based polymer.

Still another embodiment provides a rechargeable lithium battery.

The rechargeable lithium battery includes the electrode for a rechargeable lithium battery; and an electrode for a rechargeable lithium battery facing the electrode for a rechargeable lithium battery.
54. A rechargeable lithium battery, comprising:
   the electrode for a rechargeable lithium battery of claims 1-53; and
   an electrode for a rechargeable lithium battery facing the electrode for a rechargeable lithium battery.
55. The battery of claim 54, wherein the rechargeable lithium battery has no separator.

In the electrode for a rechargeable lithium battery according to one embodiment, the organic-inorganic composite layer is integrated with the active material layer. Therefore, it is not necessary to perform a lamination process for combining the separator and the active material layer, and thus a battery can be manufactured economically. As the air permeability and tensile strength of the organic-inorganic composite layer in the electrode for a rechargeable lithium battery according to one embodiment are improved, the organic-inorganic composite layer can replace a conventional separator, thereby also increasing the mechanical strength of the electrode.

In the electrode for a rechargeable lithium battery according to one embodiment, the adhesion and tensile strength of the organic-inorganic composite layer can be improved, and thus the organic-inorganic composite layer can replace a conventional separator, thereby increasing the reliability of the electrode. In the electrode for a rechargeable lithium battery according to one embodiment, the electrode wettability of the organic-inorganic composite layer can be improved, thereby increasing the reliability of the electrode in the battery.

In the electrode for a rechargeable lithium battery according to one embodiment, the organic-inorganic composite layer is integrated with the active material layer. Therefore, it is not necessary to perform a lamination process for combining the separator and the active material layer, a battery can be manufactured economically. In one embodiment, the electrode for a rechargeable lithium battery can exhibit improved air permeability and improved stability against foreign substances. This can reduce the resistance associated with the migration of lithium ions and lower the cell defect rate caused by foreign substances during the manufacture of a rechargeable lithium battery such as a stacked cell or electrode volume expansion when charging and discharging. The electrode for a rechargeable lithium battery according to one embodiment can exhibit improved tensile strength, improved electrolyte wettability, improved adhesion, and improved heat resistance, and include an organic-inorganic composite layer exhibiting a shutdown effect, thereby increasing the reliability of a rechargeable battery without a conventional separator.

### BRIEF DESCRIPTION OF THE DRAWINGS

The above and other objects, features and advantages of the present disclosure will become more apparent to those of ordinary skill in the art by describing example embodiments thereof in detail with reference to the accompanying drawings, in which:
FIG. 1 is a cross-sectional view of an electrode for a rechargeable lithium battery according to a first, second, or third embodiment;
FIG. 2 shows the results of line scan analysis of the surface of a fiber of an organic-inorganic composite layer according to the first embodiment using a transmission electron microscope (TEM);
FIG. 3 shows the TEM results for the surface of the fiber of the organic-inorganic composite layer according to the first embodiment;
FIG. 4 shows the TEM results for the cross-section of a fiber of the organic-inorganic composite layer according to the first embodiment;
FIG. 5 shows the TEM results for the surface of the fiber of an organic-inorganic composite layer according to the second embodiment;
FIG. 6 shows the TEM results for the cross-section of the fiber of organic-inorganic composite layer according to the second embodiment;
FIG. 7 shows the lateral analysis results for a fiber included in an organic-inorganic composite layer according to the third embodiment;
FIG. 8 shows the results of high angle annular dark field scanning transmission electron microscope (HAADF-STEM) analysis for silicon and carbon in the cross-section of the fiber according to the third embodiment;
FIG. 9 shows the result of the HAADF-STEM results for the fiber according to the third embodiment;
FIG. 10 shows the results of transmission electron microscope-energy dispersive spectroscopy (TEM-EDS) for the fiber according to the third embodiment;
FIG. 11 is a schematic cross-sectional view of the sea-island fiber according to the third embodiment;
FIGS. 12 to 15 are cross-sectional views of an electrode for a rechargeable lithium battery according to a fourth embodiment;
FIG. 16 shows the HAADF-STEM results for a fiber according to a fourth embodiment;
FIG. 17 shows the results of scanning transmission electron microscope-energy dispersive spectroscopy (STEM-EDS) for the fiber according to the fourth embodiment;
FIG. 18 is a schematic cross-sectional view of the sea-island fiber according to the fourth embodiment;
FIG. 19 is a cross-sectional view of an electrode assembly for a rechargeable lithium battery according to the fourth embodiment;
FIGS. 20 to 23 schematically illustrate a rechargeable lithium battery according to one embodiment;
FIG. 24 shows the SEM results for an organic-inorganic composite layer before shutdown evaluation of Example 7;
FIG. 25 shows the SEM results for the organic-inorganic composite layer after shutdown evaluation of Example 7;
FIG. 26 shows the SEM results obtained after hot-pressing the organic-inorganic composite layer of Example 7;
FIG. 27 shows the SEM results obtained after hot-pressing an organic-inorganic composite layer of Comparative Example 7; and
FIG. 28 shows the diagram illustrating a method for measuring short-circuit strength during pressing after injecting foreign substances.

### DETAILED DESCRIPTION

Hereinafter, preferred example embodiments of the present disclosure are described in detail with reference to the attached drawings. Prior to this, terms or words used in this specification and claims should not be interpreted as limited to their typical or dictionary meanings, but should be interpreted with meanings and concepts that conform to the technical idea of the present disclosure based on the principle that the inventor can appropriately define the concept of the term in order to explain his own disclosure in the best way. Therefore, it should be understood that the example embodiments described in this specification and the configurations illustrated in the drawings are only some of the most preferred example embodiments of the present disclosure and do not represent all of the technical idea of the present disclosure, and various equivalents and modifications may exist at the time of filing this application. In addition, when used in this specification, "comprise" and "include" and/or "comprising" specify the presence of mentioned shapes, numbers, steps, operations, elements, components and/or groups thereof, and do not exclude the presence or addition of one or more other shapes, numbers, operations, elements, components and/or groups thereof. Additionally, when describing example embodiments of the present disclosure, "may" and "may be" may include "one or more example embodiments of the present disclosure."

Hereinafter, example embodiments of the present disclosure are described in detail. However, these are presented as examples, and the present disclosure is not limited thereby, and the present disclosure is defined only by the scope of the claims described below.

Unless otherwise specified herein, when a part such as a layer, a film, a region, or a plate is described as being "on" another part, this includes not only a case where the part is "directly on" the other part, but also a case where still another part is present therebetween.

Unless particularly stated otherwise, what is expressed in the singular may also include the plural. Additionally, unless otherwise specified, "A or B" may mean "including A, including B, or including A and B".

In the specification, "combination thereof" may mean a mixture, laminate, composite, copolymer, alloy, blend, and reaction product of components.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

In the specification, "particle size (D50)" refers to an average particle size indicating the size of particles with a cumulative volume of 50 vol% in the particle size distribution. Particle size distribution may be measured by a method widely known to those of ordinary skill in the art. For example, the particle size distribution may be measured using a particle size analyzer, or by transmission electron microscopy or scanning electron microscopy. As another method, by using a measuring device that uses dynamic light-scattering, particle size may be measured using dynamic light-scattering, the number of particles may be counted for each particle size range through data analysis, and the D50 value may be obtained by being calculated from this. Alternatively, the number of particles may be measured using a laser diffraction method. When measuring by laser diffraction, more specifically, particles to be measured may be dispersed in a dispersion medium, irradiated with approximately 28 kHz ultrasonic waves at an output of 60 W by introducing it into a commercially available laser diffraction particle size measuring device (e.g., Microtrac MT 3000), and D50 may be calculated based on 50% by volume of the particle size distribution using the measuring device.

If the above particle is spherical, the above size may mean the diameter.

When describing a numerical range in this specification, 'X to Y' means 'X or more and Y or less (X ≤ and ≤ Y).

Hereinafter, a rechargeable lithium battery will be mainly described. However, the present disclosure may be applied not only to a rechargeable lithium battery, but also to other types of rechargeable batteries.

An electrode for a rechargeable lithium battery (hereinafter, also referred to as an "electrode") according to one embodiment includes an active material layer for a rechargeable lithium battery; and an organic-inorganic composite layer integrated with the active material layer, wherein the organic-inorganic composite layer includes fibers containing poly(silsesquioxane) (PSSQ).

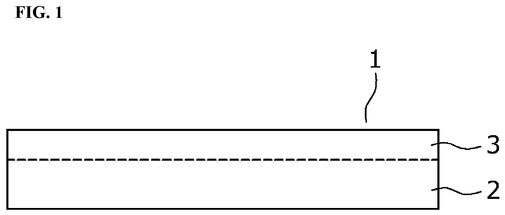

FIG. 1 is a cross-sectional view of an electrode for a rechargeable lithium battery according to a first, second, or third embodiment.

Referring to FIG. 1, the electrode 1 may include an active material layer 2 for a rechargeable lithium battery, an organic-inorganic composite layer 3 integrated on one surface of the active material layer 2 for a rechargeable lithium battery. In FIG. 1, it is shown that the active material layer 2 for a rechargeable lithium battery and the organic-inorganic composite layer are formed in separate layers, but the dotted line represents the integration of the active material layer 2 for a rechargeable lithium battery with the organic-inorganic composite layer 3.

### First electrode for rechargeable lithium battery

The electrode for a rechargeable lithium battery (hereinafter, also referred to as an "electrode") includes an active material layer for a rechargeable lithium battery; and an organic-inorganic composite layer integrated with the active material layer, wherein the organic-inorganic composite layer includes a fiber that contains PSSQ with crosslinkable functional groups.

The fiber may be a core-shell fiber having a core and a shell surrounding the core. The shell may include the PSSQ with crosslinkable functional groups. The core may include a non-silicon-based polymer to be described below.

The organic-inorganic composite layer may exhibit improved tensile strength, and improved air permeability. In one embodiment, the organic-inorganic composite layer may have a tensile strength of 250 kgf/cm² or more, for example, 450 kgf/cm² or more, for example, 450 to 800 kgf/cm². Within the above range, the reliability of the electrode may increase. In one embodiment, the organic-inorganic composite layer may have air permeability of 120 sec/100cc or less, for example, 10 to 120 sec/100cc. Within the above range, the organic-inorganic composite layer can replace a conventional separator. The tensile strength and air permeability may be measured by methods to be described below.

### Organic-inorganic composite layer

The organic-inorganic composite layer may serve as a separator that is located between the active material layer for a rechargeable lithium battery and an electrode facing the same and prevents a short circuit.

A rechargeable lithium battery including the electrode may not include a separate separator. Accordingly, the electrode does not need a lamination process for combining a separator and an electrode during the manufacture of a battery such as a stacked cell, making it possible to manufacture a battery in a simpler and more economical process. In addition, the electrode has no thermal shrinkage problem caused by a conventional separator, thereby increasing the stability and lifespan of the battery.

The organic-inorganic composite layer may be integrated with the active material layer for a rechargeable lithium battery. Here, "integration" may refer to a state in which an organic-inorganic composite layer is directly formed on the active material layer without intervention of any other layer, that is, an organic-inorganic composite layer is more firmly bonded to the active material layer.

The integration of the active material layer and the organic-inorganic composite layer may be confirmed using a scanning electron microscope (SEM) or a transmission electron microscope (TEM). According to one embodiment, the SEM or TEM results clearly show that the active material layer can be distinguished from the organic-inorganic composite layer, but the interface (boundary) between them is not clearly defined and appears uneven.

The organic-inorganic composite layer may be formed by permeating into the active material layer, drying, and crosslinking. This can prevent an increase in resistance during lithium ion migration. A process of forming the organic-inorganic composite layer is described in detail below.

The organic-inorganic composite layer may be a monolayer. Here, "monolayer" may mean that the fiber that contains PSSQ with crosslinkable functional groups is electrospun onto the active material layer to form one layer where the organic and inorganic components are not included in separate layers but included in a single layer.

The organic-inorganic composite layer may have a non-woven state, for example, a network structure of a plurality of fibers. The network structure may be advantageous for minimizing resistance during lithium-ion migration. The network structure may refer to a porous layer in which pores are randomly formed between fibers. According to one embodiment, the diameters of the pores may range from 500 nm or less, for example, 10 to 300 nm.

The fibers may be microfibers or nanofibers, based on their average diameter. The average diameter of the fibers may range from 500 nm or less, for example, 10 to 350 nm, or 10 to 300 nm. Within the above range, the organic-inorganic composite layer can be readily formed. Here, the "average diameter" of the nanofibers may be an average value calculated from the diameters measured from a plurality of nanofibers (about 100) selected from an SEM image.

The organic-inorganic composite layer includes a fiber that contains the PSSQ with crosslinkable functional groups.

The PSSQ can be electrospun as is, as well as homogeneously dispersed in the polymer even when mixed with a polymer to be described below. Accordingly, the PSSQ may achieve the effects of the organic-inorganic composite layer even at an arbitrary location therein, thereby increasing reliability.

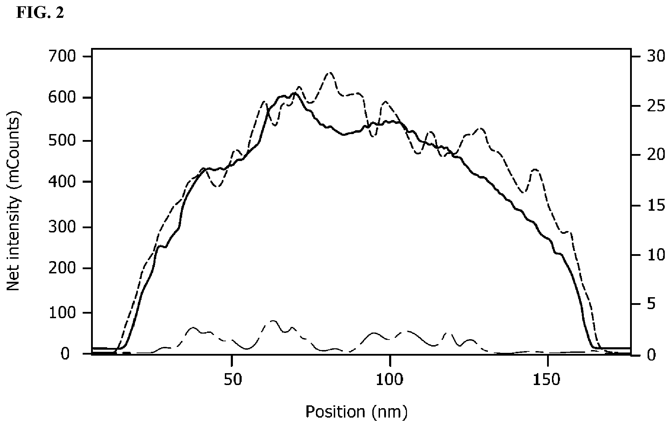

FIG. 2 shows the results of line scan analysis of the surface of a fiber of an organic-inorganic composite layer according to the first embodiment. Referring to FIG. 2, it can be confirmed that silicon is distributed in the organic-inorganic composite layer. In FIG. 2, silicon (Si) can represent the location of the PSSQ in fibers. In FIG. 2, the solid line represents carbon, the dotted line represents high angle annular dark field (HAADF), and the dash-dot line represents silicon.

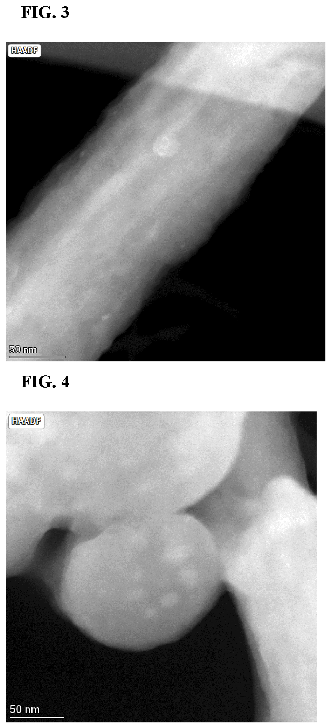

FIGS. 3 and 4 show the TEM results for the surface and cross-section of the fiber of the organic-inorganic composite layer according to the first embodiment. Referring to FIGS. 3 and 4, the relatively white parts are silicon, indicating that silicon is uniformly distributed throughout the fiber.

The PSSQ has crosslinkable functional groups. At least some crosslinkable functional groups may be crosslinked with each other during the formation of the organic-inorganic composite layer. This can improve the tensile strength of the organic-inorganic composite layer not only by increasing the degree of linkages between PSSQs in the same fiber, but also by increasing the degree of linkages between PSSQs in neighboring fibers within the organic-inorganic composite layer. In addition, the PSSQ may further increase the tensile strength of the organic-inorganic composite layer by interaction with a polymer to be described below.

In one embodiment, the fiber may at least include a crosslinked product of the PSSQ with crosslinkable functional groups.

The crosslinkable functional group may be a functional group that can be crosslinked by heat and/or light. For example, the crosslinkable functional group may include one or more of a (meth)acryl group, a (meth)acryloxy group, and a (meth)acryloxyalkyl group.

The crosslinkable functional group may be presented by Chemical Formula 1 below, but the present disclosure is not limited thereto: 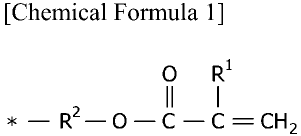 (In Chemical Formula 1,
* is a connecting part of an element,
R¹ is hydrogen or a methyl group, and
R² is a single bond or a C1 to C20 alkylene group).

The crosslinkable functional group may be included at any location in the PSSQ. For example, the crosslinkable functional group may be included at the end of the PSSQ.

The PSSQ with crosslinkable functional groups may further have a substituted or unsubstituted aromatic group. The substituted or unsubstituted aromatic group, for example, a phenyl group, has a lower crosslinking speed and a higher energy required for crosslinking, compared to epoxy. Therefore, after electrospinning, compared to PSSQ with epoxy as a functional group, the process can be performed at a higher temperature. When a post-process is performed at a high temperature following spinning, the polymer used together is increased in crystallinity due to recrystallization and annealing effects. Therefore, it may have a higher mechanical strength than the PSSQ with epoxy as a functional group. Here, "substituted or unsubstituted aromatic group" may refer to a substituted or unsubstituted C6 to C10 monocyclic or heterocyclic aromatic group. Here, "substituted or unsubstituted" may mean that one or more hydrogen atoms of the functional group are substituted with a C1 to C10 alkyl, a halogen, a hydroxyl group, an amino group, or a C6 to C10 aryl group. For example, the substituted or unsubstituted aromatic group may be a phenyl group, and the crossslinkable functional group may be a (meth)acryl group. For example, the substituted or unsubstituted aromatic group may be bound to silicon of the PSSQ.

The PSSQ with crosslinkable functional groups may be a random type, a ladder type, a cage type, or a partial cage type. For example, the PSSQ with crosslinkable functional groups may be a ladder type.

In one embodiment, the PSSQ with crosslinkable functional groups may have a unit of Chemical Formula 2 below:

[Chemical Formula 2] [RSiO_{2/3}]ₙ

(In Chemical Formula 2,
R is hydrogen, a hydroxyl group, a C1 to C20 alkyl group, a C2 to C20 alkenyl group, a C2 to C20 alkynyl group, a C3 to C20 cycloalkyl group, a C6 to C20 aryl group, a C7 to C20 arylalkyl group, a crosslinkable functional group, or a combination thereof, n is the number of moles of the unit, and at least one of Rs is a crosslinkable functional group.).

n may be 1 to 1,000,000.

In one embodiment, the PSSQ with crosslinkable functional groups is a ladder type, which may be represented by Chemical Formula 3 below, but the present disclosure is not limited thereto. 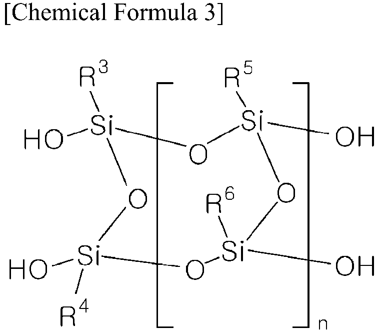 (In Chemical Formula 3,
R³, R⁴, R⁵, and R⁶ are each independently hydrogen, a hydroxyl group, a C1 to C20 alkyl group, a C2 to C20 alkenyl group, a C2 to C20 alkynyl group, a C3 to C20 cycloalkyl group, a C6 to C20 aryl group, a C7 to C20 arylalkyl group, a crosslinkable functional group, or a combination thereof,
at least one of R³, R⁴, R⁵, and R⁶ is a crosslinkable functional group, and
n is the number of moles of the above unit).
n may be 1 to 1,000,000.

In Chemical Formula 3, the crosslinkable functional group may be the same as defined in Chemical Formula 1.

In Chemical Formula 3, R³, R⁴, R⁵, and R⁶ are each independently a hydroxyl group, a C6 to C20 aryl group, a crosslinkable functional group, or a combination thereof, and at least one of R³, R⁴, R⁵, and R⁶ may be a crosslinkable functional group.

The PSSQ with crosslinkable functional groups may have a weight average molecular weight of 2,000 to 100,000 g/mol, for example, 2000, 3000, 4000, 5000, 6000, 7000, 8000, 9000, 10000, 11000, 12000, 13000, 14000, 15000, 16000, 17000, 18000, 19000, 20000, 25000, 30000, 35000, 40000, 45000, 50000, 55000, 60000, 65000, 70000, 75000, 80000, 85000, 90000, 95000, 100000g/mol, or 15,000 to 20,000g/mol. Within the above range, the viscosity of the PSSQ can be readily adjusted. The weight average molecular weight may be obtained as a polystyrene standard conversion value by gel permeation chromatography.

The fibers may be formed of the PSSQ with crosslinkable functional groups alone. However, they may further include a polymer to make it easy to perform electrospinning for forming the fibers.

In one embodiment, the PSSQ with crosslinkable functional groups may be included at 10 to 80 wt%, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, or 80 wt%, or 10 to 70 wt% of the fibers. Within the above range, it can be easy to achieve the above-described effects of the organic-inorganic composite layer.

The type of polymer is not particularly limited, provided that it is suitable for electrospinning and does not adversely affect the dispersion and function of the PSSQ with crosslinkable functional groups. For example, the polymer is a non-silicon-based polymer (not including silicon), and may include polyvinylidene fluoride (PVDF), polyacrylonitrile (PAN), polyamideimide (PAI), polyvinylpyrrolidone (PVP), polyacrylic acid (PAA), polyvinyl alcohol (PVA), aramid, or a combination thereof.

In one embodiment, the polymer may be a mixture of PVDF and PAN. This mixture is suitable for electrospinning when combined with the PSSQ with crosslinkable functional groups, and can exhibit the effect of increasing the dispersibility of the PSSQ with crosslinkable functional groups. With respect to 100 parts by weight of the mixture, PVDF and PAN may be included in a ratio of 10 to 90 parts by weight: 10 to 90 parts by weight, for example, 10:90, 15:85, 20:80, 25:75, 30:70, 35:65, 40:60, 45:55, 50:50, 55:45, 60:40, 65:35, 70:30, 75:25, 80:20, 85:15, 90:10, or 20 to 60 parts by weight:40 to 80 parts by weight. Within the above range, in the mixture, the PSSQ with crosslinkable functional groups can exhibit high dispersibility.

In one embodiment, the fibers may include the PSSQ at 1 to 50 parts by weight, for example, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47,4 8, 49, or 50 parts by weight, or 10 to 50 parts by weight or 5 to 30 parts by weight with respect to 100 parts by weight of the polymer. Within the above range, the PSSQ can exhibit high dispersibility.

The organic-inorganic composite layer may have a thickness of 1 to 30 µm, for example, 5 to 15 µm. Within the above range, it can be used in batteries.

The organic-inorganic composite layer may be prepared by forming a layer containing fibers on at least one surface of the active material layer and crosslinking the layer containing fibers.

First, the layer containing fibers is formed on at least one surface of the active material layer.

According to one embodiment, the layer containing fibers may be formed by electrospinning a solution for forming the layer containing fibers on one surface of the active material layer. The solution may include the PSSQ with crosslinkable functional groups, and further include the polymer.

The electrospinning may be performed by positioning one nozzle pack consisting of a tip with a needle size of 23 to 30 gauge (G) and a collector roller at a certain interval, injecting the solution into the nozzle pack, placing the active material layer on the collector roller, and applying a voltage of 35 to 90 kV to the tip. The distance between the nozzle pack and the active material layer may be 10 to 20 cm. When the needle size of the tip is 25 to 30G, it is preferable because an organic-inorganic composite layer can be formed in a desired shape.

During the electrospinning process, the solution is spun and stretched into a fiber shape, so that the layer containing fibers can be formed on the active material layer. The solution hangs in the form of a droplet due to surface tension at the end of the tip, and when a voltage is applied, charges accumulate on the surface of the solution and a repulsive force is generated. When the critical voltage is reached where the repulsive force between charges becomes higher than the surface tension of the solution, a Taylor cone is generated, and a polymer solution jet is ejected from the tip of the cone and is highly elongated to form fibers, which are collected on the active material layer to form the layer containing fibers.

According to one embodiment, the electrospinning process may be performed at 15 to 40 °C and a relative humidity of 40 to 60%. When the electrospinning process is performed under the above-mentioned temperature and relative humidity conditions, there is an advantage of maintaining a constant fiber diameter while spinning.

The solution may further include an initiator for promoting crosslinking of the PSSQ with crosslinkable functional groups. The initiator may include one or more of a thermal initiator and a photoinitiator. The thermal initiator and the photoinitiator may be any conventional types known to those of ordinary skill in the art.

The solution may further include a solvent, and the solvent may include, for example, dimethylacetamide, dimethylsulfoxide, dimethylformamide, tetrahydrofuran, carbon tetrachloride, methylpyrrolidone, water, ethanol, acetone, or a combination thereof. The solvent may be included as a residue in the organic-inorganic composite layer.

In the solution, the content of the PSSQ with crosslinkable functional groups, or a mixture of the PSSQ with crosslinkable functional groups and the polymer may be 5 to 40 wt% with respect to 100 wt% of the total solution. Within the above range, the organic-inorganic composite layer can be formed to a suitable thickness.

In one embodiment, after the electrospinning process, a drying process may be performed at 50 to 100 °C.

The layer containing fibers may be pressed or hot-pressed after crosslinking. The compression may increase the density between fibers in the layer containing fibers, and reduce the thickness of the organic-inorganic composite layer.

According to one embodiment, the hot-pressing may be performed by pressing the layer containing fibers at 50 °C or more, for example, 50 to 100 °C. The purpose of pressing is to control the thickness of the fibrous layer, and thus the shape and the size of pressing device are not limited as long as a desired thickness can be obtained. In one embodiment, pressing is performed using a hot-pressing roller, and a desired thickness can be achieved by adjusting the distance between rolls.

Additionally, the fibers may be crosslinked by thermally treating the layer containing fibers under certain conditions. For the thermal treatment, a thermal treatment temperature, and/or thermal treatment time may be adjusted according to the content of the PSSQ or a polymer in the fibers. The thermal treatment may be performed at 50 to 200 °C, for example, 100 to 150 °C for 5 to 60 minutes.

### Active material layer for rechargeable lithium battery

The active material layer for a rechargeable lithium battery may be a positive electrode active material layer or a negative electrode active material layer. For example, the active material layer for a rechargeable lithium battery may be a positive electrode active material layer.

The positive electrode active material layer may include a positive electrode active material, and further include a binder, and/or a conductive material. In one example, the positive electrode active material layer may further include an additive that can serve as a sacrificial positive electrode.

The content of the positive electrode active material may be 90 to 99.5 wt% with respect to 100 wt% of the positive electrode active material layer, and the content of each of the binder, and the conductive material may be 0.5 wt% to 5 wt% with respect to 100 wt% of the positive electrode active material layer.

As the positive electrode active material, a compound enabling reversible intercalation and deintercalation of lithium (lithiated intercalation compound) may be used. Specifically, one or more of composite oxides of lithium and at least one metal selected from cobalt, manganese, nickel, and combinations thereof may be used.

The composite oxide may be a lithium transition metal composite oxide, and specifically, a lithium nickel oxide, a lithium cobalt oxide, a lithium manganese oxide, a lithium iron phosphate compound, a cobalt-free lithium nickel-manganese oxide, or a combination thereof.

In one example, a compound represented by any one of the following Chemical Formulas may be used: LiₐA_{1-b}X₃O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co₃X_{c}O_{2-α}D_{α}(0.90≤a≤1.8, 0≤b≤0.5, 0≤c≤0.5, 0<α<2); LiₐNi_{1-b-c}Mn₃X_{c}O_{2-α}D_{α}(0.90≤a≤1.8, 0≤b≤0.5, 0≤c≤0.5, 0<α<2);

LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG₃O₂(0.90≤a≤1.8, 0.001≤b≤0.1); LiₐMn_{1-b}G₃O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); and LiₐFePO₄(0.90≤a≤1.8).

In the above Chemical Formulas, A is Ni, Co, Mn, or a combination thereof; X is Al, Ni, Co, Mn, Cr, Fe, Mg, Sr, V, a rare earth metal element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

In one example, the positive electrode active material may be a high-nickel positive electrode active material in which a nickel content is 80 mol% or more, 85 mol% or more, 90 mol% or more, 91 mol% or more, 94 mol% or more, or 99 mol% or less with respect to 100 wt% of the metals in the lithium transition metal composite oxide, excluding lithium. Such a high-nickel positive electrode active material may exhibit high capacity and thus can be applied to high-capacity, high-density rechargeable lithium batteries.

The binder may allow positive electrode active material particles to adhere well to each other, and also allow the positive electrode active material to adhere well to a current collector. Representative examples of binders may include PVA, carboxymethyl cellulose, hydroxypropyl cellulose, cellulose diacetate, polyvinyl chloride, carboxylated polyvinyl chloride, polyvinyl fluoride, polymers containing ethylene oxide, PVP, polyurethane, polytetrafluoroethylene, PVDF, polyethylene, polypropylene, styrene-butadiene rubber, (meth)acrylated styrene-butadiene rubber, epoxy resin, (meth)acrylic resin, polyester resin, and nylon, but the present disclosure is not limited thereto.

The conductive material is used to impart conductivity to the electrode, and any electronically conductive material that does not cause chemical changes in the battery in which it is employed can be used. Examples of conductive materials include carbon-based materials such as natural graphite, artificial graphite, carbon black, acetylene black, Ketjen black, carbon fibers, carbon and nanofibers; metal-based materials containing copper, nickel, aluminum, silver, etc. in the form of a metal powder or metal fiber; conductive polymers such as polyphenylene derivatives; or mixtures thereof.

The negative electrode active material layer may include a negative electrode active material, and further include a binder, and/or a conductive material. For example, the negative electrode active material layer may include 90 to 99 wt% of the negative electrode active material, a 0.5 to 5 wt% of the binder, and 0 to 5 wt% of the conductive material.

The negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, such as crystalline carbon, amorphous carbon, or a combination thereof. The crystalline carbon may be graphite such as amorphous, platelike, flaky, spherical, or fibrous natural graphite or artificial graphite, and the amorphous carbon may be soft or hard carbon, mesophase pitch carbide, or calcined coke.

The alloy of lithium and a metal may be an alloy of lithium with at least one of the metals Na, K, Rb, Cs, Fr, Be, Mg, Ca, Sr, Si, Sb, Pb, In, Zn, Ba, Ra, Ge, Al, and Sn.

The material capable of doping and dedoping lithium may be a Si-based negative electrode active material or an Sn-based negative electrode active material. The Si-based negative electrode active material may be silicon, a silicon-carbon composite, SiOx (0 < x < 2), a Si-Q alloy (Q is one of alkali metals, alkaline earth metals, group 13 elements, group 14 elements (except Si), group 15 elements, group 16 elements, transition metals, rare earth elements, and combinations thereof), or combinations thereof. The Sn-based negative electrode active material may be Sn, SnO₂, an Sn-based alloy, or a combination thereof.

The silicon-carbon composite may be a composite of silicon and amorphous carbon. According to one embodiment, the silicon-carbon composite may be a silicon particle coated with amorphous carbon. For example, the silicon-carbon composite may include a secondary particle (core) in which primary silicon particles are assembled, and an amorphous carbon coating layer (shell) located on the surface of the secondary particle. The amorphous carbon is also located between the primary silicon particles, and thus the primary silicon particle may be coated with, for example, amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer located on the core surface.

The Si-based negative electrode active material or the Sn-based negative electrode active material may be used after being mixed with a carbon-based negative electrode active material.

The binder allows the negative electrode active material particles to adhere well to each other, and allows the negative electrode active material to adhere well to a current collector. As the binder, a non-aqueous binder, an aqueous binder, a dry binder, or a combination thereof may be used.

The non-aqueous binder may be polyvinyl chloride, carboxylated polyvinyl chloride, polyvinyl fluoride, ethylene propylene copolymers, polystyrene, polyurethane, polytetrafluoroethylene, PVDF, polyethylene, polypropylene, PAI, polyimide, or a combination thereof.

The aqueous binder may be at least one of styrene-butadiene rubber, (meth)acrylated styrene-butadiene rubber, (meth)acrylonitrile-butadiene rubber, (meth)acryl rubber, butyl rubber, fluoroelastomer, polyethylene oxide, PVP, polyepichlorohydrin, polyphosphazene, poly(meth)acrylonitrile, ethylene-propylene-diene copolymers, polyvinylpyridine, chlorosulfonated polyethylene, latex, polyester resin, (meth)acrylic resin, phenolic resin, epoxy resin, polyvinyl alcohol, and combinations thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, and alkali metal salts thereof may be mixed and used. The alkali metal may be Na, K, or Li.

The dry binder is a polymer material capable of being fiberized, and may be, for example, polytetrafluoroethylene, PVDF, a polyvinylidene fluoride-hexafluoropropylene copolymer, polyethylene oxide, or a combination thereof.

The conductive material is used to impart conductivity to an electrode, and any electronically conductive material that does not cause chemical changes in the battery in which it is employed can be used. Specific examples of conductive materials include carbon-based materials such as natural graphite, artificial graphite, carbon black, acetylene black, Ketjen black, carbon fibers, carbon and nanofibers; metal-based materials containing copper, nickel, aluminum, silver, etc. in the form of a metal powder or metal fiber; conductive polymers such as polyphenylene derivatives; or mixtures thereof.

The electrode for a rechargeable lithium battery may further include a current collector.

The current collector may be located on one surface of the active material layer. According to one embodiment, the electrode may include the active material layer, a current collector located on one surface of the active material layer, and an organic-inorganic composite layer located on the other surface of the active material layer. According to one embodiment, the organic-inorganic composite layer may be formed on the other surface of the current collector.

The current collector for the positive electrode active material layer may include an aluminum current collector. The current collector for the negative electrode active material layer may be at least one of copper foil, nickel foil, stainless steel foil, titanium foil, nickel foam, copper foam, a polymer substrate coated with a conductive metal, and combinations thereof.

### Second electrode for rechargeable lithium battery

The electrode for a rechargeable lithium battery (hereinafter, also referred to as an "electrode") includes an active material layer for a rechargeable lithium battery; and an organic-inorganic composite layer integrated with the active material layer, wherein the organic-inorganic composite layer includes a fiber containing PSSQ with crosslinkable functional groups, and an aramid-based polymer.

The fiber may be a core-shell fiber having a core and a shell surrounding the core. The shell may include the PSSQ with crosslinkable functional groups. The core may include a non-silicon-based polymer to be described below.

The aramid-based polymer may improve the electrolyte wettability of the organic-inorganic composite layer. In one embodiment, the electrolyte wetting rate of the organic-inorganic composite layer may be 5.0 mm²/s or more.

The organic-inorganic composite layer may include an aramid-based polymer and PSSQ with crosslinkable functional groups, thereby providing not only improved electrolyte wettability but also improved tensile strength and improved adhesion. The aramid-based polymer is well known as a material with high mechanical strength. The introduction of this material can increase the strength of the fibrous membrane. However, due to poor adhesive properties, this material is difficult to employ in a composite material. The present disclosure is intended to improve tensile strength and adhesion using PSSQ with crosslinkable functional groups in an aramid-based polymer. When both the aramid-based polymer and the PSSQ with crosslinkable functional groups are used, due to a low molecular weight of the PSSQ, the polymer chain of the PSSQ is inserted between the chains of the aramid-based polymer, resulting in entanglement of the aramid-based polymer. Therefore, since the PSSQ exerts an elongation effect on the aramid-based polymer, tensile strength may increase when the two materials are mixed. In addition, the PSSQ has an epoxy group with high adhesion as a functional group, resulting in improved adhesion of the fibrous membrane. Moreover, the backbone of the PSSQ has -Si-O-, and this structure shows high affinity with an electrolyte. That is, due to this structure, the electrolyte impregnation property of the fibrous membrane is also improved. It is considered that this action improves the tensile strength and adhesion of the organic-inorganic composite layer, but the present disclosure is not limited thereto.

The organic-inorganic composite layer may have a tensile strength of 900 kgf/cm² or more, for example, 1300 kgf/cm² or more, for example, 1300 to 3000 kgf/cm². Within the above range, the reliability of the electrode may increase.

The organic-inorganic composite layer may have a dry adhesion to an active material layer of 0.8 gf/mm or more, for example, 1.1 gf/mm or more, for example, 1.1 to 5 gf/mm. Within the above range, the reliability of the electrode may increase. Each of the tensile strength and the dry adhesion may be measured by a method to be described below.

### Organic-inorganic composite layer

The organic-inorganic composite layer may serve as a separator that is located between the active material layer for a rechargeable lithium battery and an electrode facing the same and prevents a short circuit.

A rechargeable lithium battery including the electrode according to one embodiment may not include a separate separator. Accordingly, the electrode does not need a lamination process that combining it with a separator when manufacturing a battery such as a stacked cell, so the battery can be manufactured in a simpler and more economical process. The electrode may have no thermal shrinkage issue caused by a conventional separator, thereby increasing the stability and lifespan of the battery.

The organic-inorganic composite layer may be integrated with the active material layer for a rechargeable lithium battery. Here, "integration" may mean that the organic-inorganic composite layer is formed directly on the active material layer without the intervention of any other layer, and a state in which the organic-inorganic composite layer is more firmly bonded to the active material layer.

The integration of the active material layer with the organic-inorganic composite layer may be confirmed using a scanning electron microscope (SEM) or a transmission electron microscope (TEM). According to one embodiment, from the SEM or TEM results, it can be clearly seen that the active material layer and the organic-inorganic composite layer are distinguished from each other, but the interface (boundary) between the active material layer and the organic-inorganic composite layer is not clearly defined and appears uneven.

The organic-inorganic composite layer may be formed by permeating into the active material layer, drying, and crosslinking. This can prevent an increase in resistance during lithium ion migration. A process of forming the organic-inorganic composite layer is described in detail below.

The organic-inorganic composite layer may be a monolayer. Here, "monolayer" may mean that the fiber that contains an aramid-based polymer and PSSQ with crosslinkable functional groups is electrospun onto the active material layer to form one layer where the organic and inorganic components are not included in separate layers but included in a single layer.

The organic-inorganic composite layer may have a non-woven state, for example, a network structure of a plurality of fibers. The network structure may be advantageous for minimizing resistance during lithium ion migration. The network structure may refer to a porous layer in which pores are randomly formed between fibers. According to one embodiment, the diameters of the pores may range from 500 nm or less, for example, from 10 to 300 nm.

The fibers may be microfibers or nanofibers, based on their average diameter. The average diameter of the fibers may range from 500 nm or less, for example, from 10 to 350 nm, or from 50 to 300 nm. Within the above range, the organic-inorganic composite layer can be readily formed. Here, "average diameter" of the nanofibers may be an average value calculated from the diameters measured from a plurality of nanofibers (about 100) selected from an SEM image.

The organic-inorganic composite layer includes fibers that contains the PSSQ with crosslinkable functional groups and the aramid-based polymer.

The PSSQ can be electrospun as is, as well as homogeneously dispersed in the fiber even when mixed with the aramid-based polymer. Accordingly, the PSSQ may achieve the effects of the organic-inorganic composite layer even at any location therein, thereby increasing reliability.

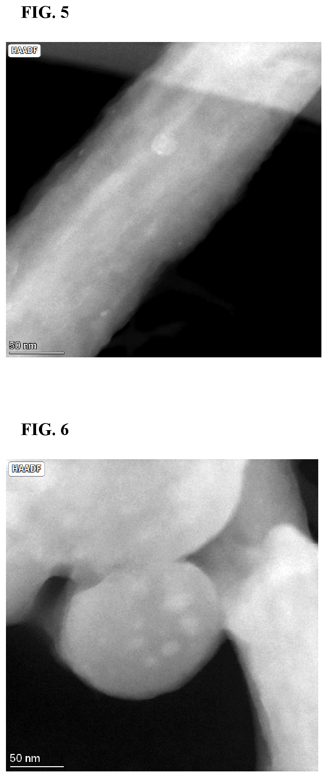

FIGS. 5 and 6 are TEM analysis results for the surface and cross-section of the fiber of the organic-inorganic composite layer, respectively. Referring to FIGS. 5 and 6, it can be seen that the relatively white parts are silicon, indicating that silicon is uniformly distributed throughout the fiber.

The fiber includes the PSSQ with crosslinkable functional groups, and the aramid-based polymer. When there is no PSSQ, the adhesion of the organic-inorganic composite layer may be significantly lowered, and the electrolyte impregnation property may also be lowered.

The PSSQ has crosslinkable functional groups. At least some of the crosslinkable functional groups may be crosslinked with each other during the formation of the organic-inorganic composite layer. This can not only increase the degree of linkages between PSSQs in the same fiber, but also increase the degree of linkages between PSSQs in neighboring fibers in the organic-inorganic composite layer, thereby improving the adhesion of the organic-inorganic composite layer.

In one embodiment, the fiber may at least include a crosslinked product of the PSSQ with crosslinkable functional groups.

The crosslinkable functional group may be a functional group that can be crosslinked by heat and/or light. For example, the crosslinkable functional group may include one or more of an epoxy group, a glycidyl group, a glycidoxyalkyl group, a (meth)acryl group, a (meth)acryloxy group, and a (meth)acryloxyalkyl group.

The PSSQ with crosslinkable functional groups may further have a substituted or unsubstituted aromatic group. The substituted or unsubstituted aromatic group may further impart an effect of further improving the adhesion of the organic-inorganic composite layer. Here, "substituted or unsubstituted aromatic group" may refer to a substituted or unsubstituted C6 to C10 monocyclic or heterocyclic aromatic group. Here, "substituted or unsubstituted" may refer to one or more hydrogen atoms of the functional group being substituted with a C1 to C10 alkyl, a halogen, a hydroxyl group, an amino group, or a C6 to C10 aryl group. For example, the substituted or unsubstituted aromatic group may be a phenyl group, and the crosslinkable functional group may be a (meth)acryl group. For example, the substituted or unsubstituted aromatic group may be bonded to silicon of the PSSQ.

The PSSQ may be a random type, a ladder type, a cage type or a partial cage type. For example, the PSSQ may be a ladder type.

The PSSQ with crosslinkable functional groups may have the unit of Chemical Formula 2:
the PSSQ with crosslinkable functional groups is a ladder type, and may be represented by Chemical Formula 3, but the present disclosure is not limited thereto.

In Chemical Formula 3, R³, R⁴, R⁵, and R⁶ are each independently a hydroxyl group, a C6 to C20 aryl group, a crosslinkable functional group, or a combination thereof, and at least one of R³, R⁴, R⁵, and R⁶ may be a crosslinkable functional group.

The crosslinkable functional group may be represented by Chemical Formula 1 or Chemical Formula 4, but the present disclosure is not limited thereto: 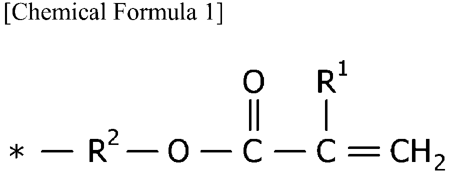 (In Chemical Formula 1,
* is a connecting part of an element,
R¹ is hydrogen or a methyl group,
R² is a single bond or a C1 to C20 alkylene group). 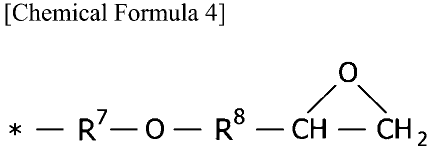
(In Chemical Formula 4,
* is a connecting part of an element, and
R⁷, and R⁸ are each independently a single bond or an alkylene group having 1 to 20 carbon atoms).

For example, the crosslinkable functional group may be represented by Chemical Formula 4. Chemical Formula 4 may further improve the adhesion of the organic-inorganic composite layer with respect to Chemical Formula 1.

The crosslinkable functional group may be included at any location in the PSSQ. For example, the crosslinkable functional group may be included at the end of the PSSQ.

The PSSQ with crosslinkable functional groups may have a weight average molecular weight of 2000 to 100,000 g/mol, for example, 2000, 3000, 4000, 5000, 6000, 7000, 8000, 9000, 10000, 11000, 12000, 13000, 14000, 15000, 16000, 17000, 18000, 19000, 20000, 25000, 30000, 35000, 40000, 45000, 50000, 55000, 60000, 65000, 70000, 75000, 80000, 85000, 90000, 95000, or 100000 g/mol, or 15,000 to 20,000 g/mol. Within the above range, it can be easy to adjust the viscosity of the PSSQ with crosslinkable functional groups. The weight average molecular weight may be obtained as a polystyrene standard conversion value by gel permeation chromatography.

The aramid-based polymer may be an aromatic polyamide-based polymer.

The aramid-based polymer may include a unit of Chemical Formula 5 below: 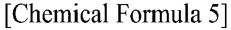 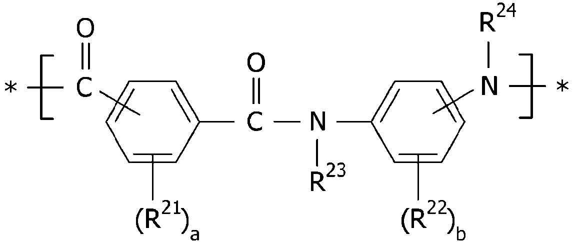 (In Chemical Formula 5,
* is a connecting part of an element,
R²¹, and R²² are each independently an C1 to C5 alkyl group, a hydroxyl group, or a C6 to C10 aryl group,
a, and b are each independently an integer from 0 to 3, and
R²³ and R²⁴ are hydrogen, a C1 to C5 alkyl group, a hydroxyl group, or a C6 to C10 aryl group).

The aramid-based polymer may have a weight average molecular weight of 3000 to 500000 g/mol, for example, 3000, 4000, 5000, 6000, 7000, 8000, 9000, 10000, 11000, 12000, 13000, 14000, 15000, 16000, 17000, 18000, 19000, 20000, 25000, 30000, 35000, 40000, 45000, 50000, 55000, 60000, 65000, 70000, 75000, 80000, 85000, 90000, 95000, 100000, 150000, 200000, 300000, 400000, or 500000 g/mol, or 5000 to 100000 g/mol. Within the above range, it can be easy to adjust the viscosity of the aramid-based polymer.

The aramid-based polymer may be prepared by a conventional method known to those of ordinary skill in the art, or may be a commercially available product.

The PSSQ with crosslinkable functional groups and the aramid-based polymer may be included in the fiber in a weight ratio of 1:1 to 20:1, for example, 1:1, 2:1, 3:1, 4:1, 5:1, 6:1, 7:1, 8:1, 9:1, 10:1, 11:1, 12:1, 13:1, 14:1, 15:1, 16:1, 17:1, 18:1, 19:1, 20:1, 3:1, or 10:1. Within the above range, it can be easy to achieve the effect of the organic-inorganic composite layer.

The type of polymer is not limited as long as it facilitates electrospinning and does affect the dispersion and functions of the aramid-based polymer and the PSSQ. For example, the polymer may be a non-silicon-based polymer that does not contain silicon, and may include PVDF, PAN, PAI, PVP, PAA, PVA, or a combination thereof.

In one embodiment, the polymer may be a mixture of PVDF and PAN. This mixture may facilitate electrospinning when combined with the PSSQ, and impart the effect of increasing the dispersibility of the PSSQ. The PVDF and the PAN may be included in a ratio of 10 to 90 parts by weight: 10 to 90 parts by weight, for example, 20 to 60 parts by weight:40 to 80 parts by weight with respect to 100 parts by weight of the mixture. Within the above range, the PSSQ can exhibit high dispersibility in the mixture.

In one embodiment, the fiber may include the PSSQ at 1 to 40 parts by weight, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 parts by weight, or for example, 5 to 30 parts by weight with respect to 100 parts by weight of the polymer. Within the above range, the PSSQ can exhibit high dispersibility.

In one embodiment, the fiber may include the aramid-based polymer at 0.1 to 30 parts by weight, for example, 0.1, 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 parts by weight, or 0.5 to 10 parts by weight with respect to 100 parts by weight of the polymer. Within the above range, the aramid-based polymer can exhibit high dispersibility.

The organic-inorganic composite layer may have a thickness of 1 to 30 µm, for example, 5 to 15 µm. Within the above range, it can be applied in batteries.

The organic-inorganic composite layer may be prepared by forming a layer containing fibers on at least one surface of the active material layer and crosslinking the layer containing fibers.

First, the layer containing fibers is formed on at least one surface of the active material layer.

According to one embodiment, the layer containing fibers may be formed by electrospinning a solution for forming the layer containing fibers onto one surface of the active material layer. The solution may include the aramid-based polymer, and the PSSQ with crosslinkable functional groups, and further include the polymer.

The electrospinning may be performed by positioning one nozzle pack consisting of a tip with a needle size of 23 to 30 gauge (G) and a collector roller at a certain interval, injecting the solution into the nozzle pack, placing the active material layer on the collector roller, and applying a voltage of 35 to 90 kV to the tip. The distance between the nozzle pack and the active material layer may be 10 to 20 cm. When the needle size of the tip is 25 to 30G, it is preferable because an organic-inorganic composite layer can be formed in a desired shape.

During the electrospinning process, the solution is spun and stretched into a fiber shape, so that the layer containing fibers can be formed on the active material layer. The solution hangs in the form of a droplet due to surface tension at the end of the tip, and when a voltage is applied, charges accumulate on the surface of the solution and a repulsive force is generated. When the critical voltage is reached where the repulsive force between charges becomes higher than the surface tension of the solution, a Taylor cone is generated, and a polymer solution jet is ejected from the tip of the cone and is highly elongated to form fibers, which are collected on the active material layer to form the layer containing fibers.

According to one embodiment, the electrospinning process may be performed at 15 to 40 °C and a relative humidity of 40 to 60%. When the electrospinning process is performed under the above-mentioned temperature and relative humidity conditions, there is an advantage of maintaining a constant fiber diameter while spinning.

The solution may further include an initiator for promoting crosslinking of the PSSQ with crosslinkable functional groups. The initiator may include one or more of a thermal initiator and a photoinitiator. The thermal initiator and the photoinitiator may be any conventional types known to those of ordinary skill in the art.

The solution may further include a solvent, and the solvent may include, for example, dimethylacetamide, dimethylsulfoxide, dimethylformamide, tetrahydrofuran, carbon tetrachloride, methylpyrrolidone, water, ethanol, acetone, or a combination thereof. The solvent may be included as a residue in the organic-inorganic composite layer.

In the solution, the content of the PSSQ with crosslinkable functional groups, or a mixture of the PSSQ with crosslinkable functional groups and the polymer may be 5 to 40 wt% with respect to 100 wt% of the total solution. Within the above range, the organic-inorganic composite layer can be formed to a suitable thickness.

In one embodiment, after the electrospinning process, a drying process may be performed at 30 to 80 °C.

The layer containing fibers may be hot-pressed after crosslinking. The compression may increase the density between fibers in the layer containing fibers, and reduce the thickness of the organic-inorganic composite layer.

According to one embodiment, the hot-pressing may be performed through a calendering process at a temperature of 50 °C or more, for example, 50 to 150 °C.

### Active material layer for a rechargeable lithium battery

The active material layer for a rechargeable lithium battery may be a positive electrode active material layer or a negative electrode active material layer. For example, the active material layer for a rechargeable lithium battery may be a positive electrode active material layer.

Since the active material layer for a rechargeable lithium battery is substantially the same as the active material layer described in 'First electrode for rechargeable lithium battery,' a detailed description thereof is omitted.

### Third electrode for rechargeable lithium battery

The electrode for a rechargeable lithium battery (hereinafter, also referred to as an "electrode") includes an active material layer for a rechargeable lithium battery; and an organic-inorganic composite layer integrated with the active material layer, wherein the organic-inorganic composite layer includes a fiber that contains a PVDF-based polymer, a PAN-based polymer, and PSSQ.

### Organic-inorganic composite layer

The organic-inorganic composite layer may serve as a separator that is located between the active material layer for a rechargeable lithium battery and an electrode facing the same and prevents a short circuit.

A rechargeable lithium battery including the electrode may not include a separate separator. Accordingly, the electrode does not need a lamination process that combines it with a separator when manufacturing a battery such as a stacked cell, so the battery can be manufactured in a simpler and more economical process. The electrode may have no thermal shrinkage issue caused by a conventional separator, thereby increasing the stability and lifespan of the battery.

The organic-inorganic composite layer is integrated with the active material layer for a rechargeable battery. Here, "integration" may mean that the organic-inorganic composite layer is formed directly on the active material layer without the intervention of any other layer, and a state in which the organic-inorganic composite layer is more firmly bonded to the active material layer.

The integration of the active material layer with the organic-inorganic composite layer may be confirmed using a scanning electron microscope (SEM) or a transmission electron microscope (TEM). According to one embodiment, from the SEM or TEM results, it can be clearly seen that the active material layer and the organic-inorganic composite layer are distinguished from each other, but the interface (boundary) between the active material layer and the organic-inorganic composite layer is not clearly defined and appears uneven.

The organic-inorganic composite layer may be formed by permeating into the active material layer, and drying. This can prevent an increase in resistance during lithium ion migration. The formation of the organic-inorganic composite layer may also involve crosslinking and/or hot-pressing, besides drying. The process of forming the organic-inorganic composite layer is described in detail below.

The organic-inorganic composite layer may be a monolayer. Here, "monolayer" may mean that the fiber is electrospun onto the active material layer to form one layer where the organic and inorganic components are not included in separate layers but included in a single layer.

The organic-inorganic composite layer may have a non-woven state, for example, a network structure of a plurality of fibers. The network structure may be advantageous for minimizing resistance during lithium ion migration. The network structure may refer to a porous layer in which pores are randomly formed between fibers. According to one embodiment, the diameters of the pores may range from 90 nm or less, for example, from 10 to 90 nm.

The fiber may be a microfiber or a nanofiber, based on the average diameter. In one embodiment, the average diameter of the fiber may be 300 nm or less, for example, 10 to 200 nm, or 10 to 100 nm. Within the above range, it can be easy to form an organic-inorganic composite layer. Here, the "average diameter" of a nanofiber may be an average value calculated from the diameters measured from a plurality of nanofibers (about 100) selected from an SEM image.

The organic-inorganic composite layer includes a fiber that contains a PVDF-based polymer, a PAN-based polymer, and PSSQ.

The PSSQ can be electrospun as is, as well as homogeneously dispersed when being mixed with a PVDF-based polymer and a PAN-based polymer. Therefore, the PSSQ can implement the effects of the organic-inorganic composite layer at any location in the organic-inorganic composite layer, thereby increasing the reliability of the electrode. Particularly, when the PSSQ is mixed with a PVDF-based polymer and a PAN-based polymer and electrospun to form a fiber, it is homogeneously distributed in the fiber, thereby significantly increasing the tensile strength of the organic-inorganic composite layer.

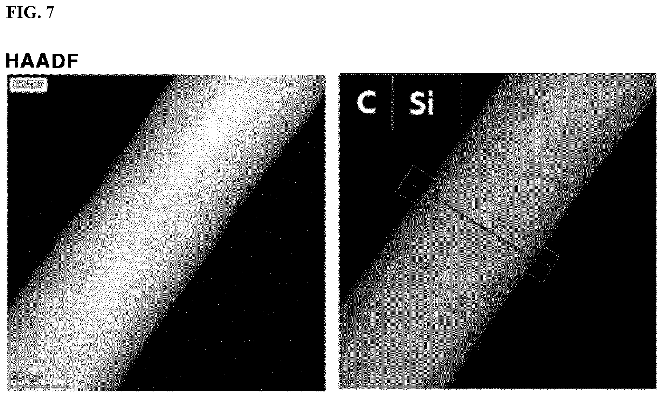

FIG. 7 is the lateral analysis results for the fiber included in the organic-inorganic composite layer. FIG. 7 shows the results obtained by measurement performed through a HAADF-STEM-EDS method.

Referring to FIG. 7, blue represents carbon, red represents silicon, and it can be seen that silicon is uniformly distributed throughout the fiber. In FIG. 7, white represents silicon, and it can be seen that silicon is uniformly distributed throughout the fiber.

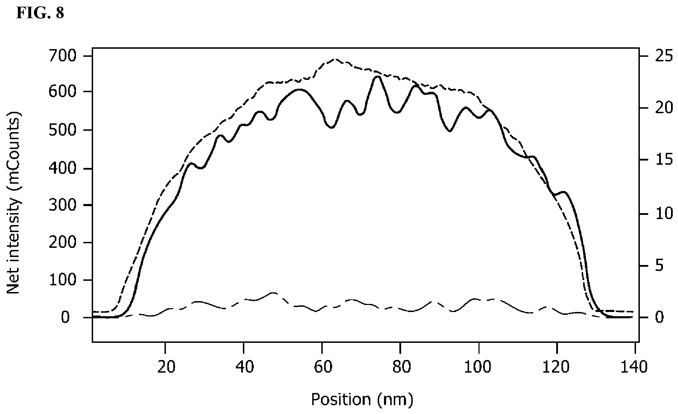

FIG. 8 shows the results of high angle annular dark field scanning transmission electron microscope (HAADF-STEM) analysis for silicon and carbon in the cross-section of the fiber. FIG. 8 is a graph showing the distribution of silicon and carbon in the scan direction as intensity after line scanning (black line in the green box on the image) in the direction orthogonal to the fiber axis (cross-sectional direction) in the right image of FIG. 7.

Referring to FIG. 8, it can be seen that silicon is uniformly distributed in the cross-section of the fiber shown in FIG. 7. In FIG. 8, the solid line represents carbon, the dash-dot line represents silicon, and the dotted line represents high angle annular dark field (HAADF).

As the fiber includes a PVDF-based polymer, a PAN-based polymer, and PSSQ, it may be formed in a sea-island fiber. Specifically, the sea-island fiber includes a sea region, and a plurality of island regions included in the sea region.

The sea region may consist of the PVDF-based polymer. The island region may have a core-shell structure having a core consisting of the PAN-based polymer, and a shell surrounding the core and consisting of the PSSQ. As compared with a fiber including the PVDF-based polymer, the PAN-based polymer, and PSSQ as separate components in the fiber, the sea-island fiber may significantly improve the tensile strength of the organic-inorganic composite layer by increasing the interactions between the three components. The specific mechanism by which the combination of the PVDF-based polymer, the PAN-based polymer, and the PSSQ forms sea-island fibers when electrospun has not been elucidated, but it is thought to be due to the specific combination of the above three components. However, the present disclosure is not limited thereto.

In the sea-island fiber, the island regions may be randomly disposed in the sea region. For example, in the cross-section of the sea-island fiber, the area ratio of the island regions may be 30 to 70%, for example, 30 to 50% or 40 to 60%. Within the above range, it can be easy to achieve the effects of the organic-inorganic composite layer. The area ratio of the island regions may refer to the ratio of the total area of the island regions with respect to the area of the cross-section of the fiber.

The sea-island fiber may be identified by scanning transmission electron microscope-energy dispersive spectroscopy (STEM-EDS).

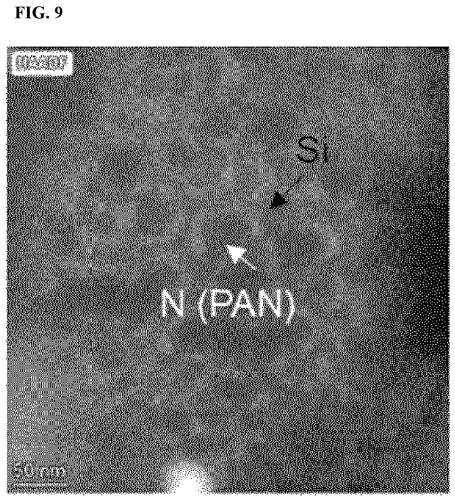

FIG. 9 shows the result of the HAADF-STEM results for the fiber. Referring to FIG. 9, a PAN core and silicon surrounding the core can be identified.

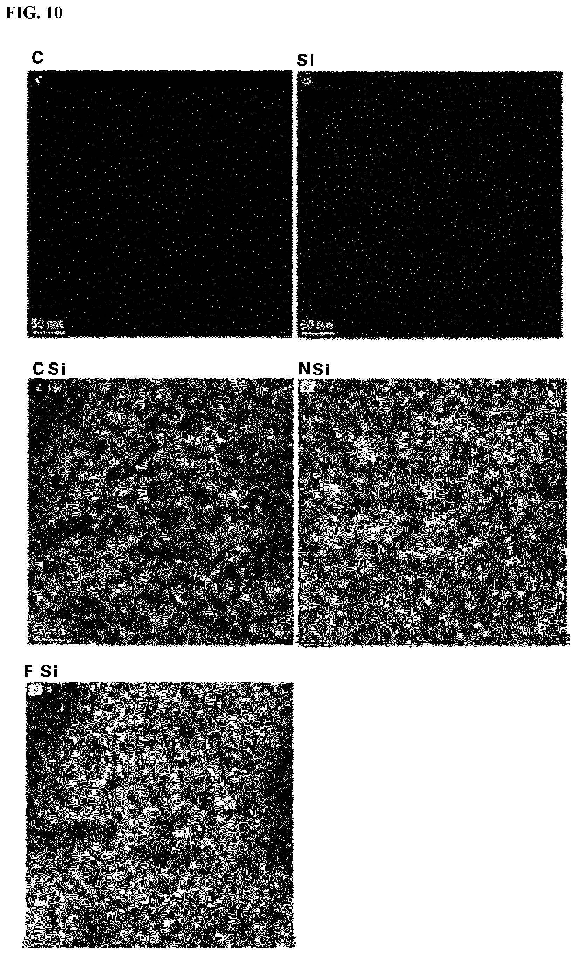

FIG. 10 shows the TEM-EDS results for the fiber. Referring to FIG. 10, it can be confirmed that the fiber included in the organic-inorganic composite layer is a sea-island fiber.

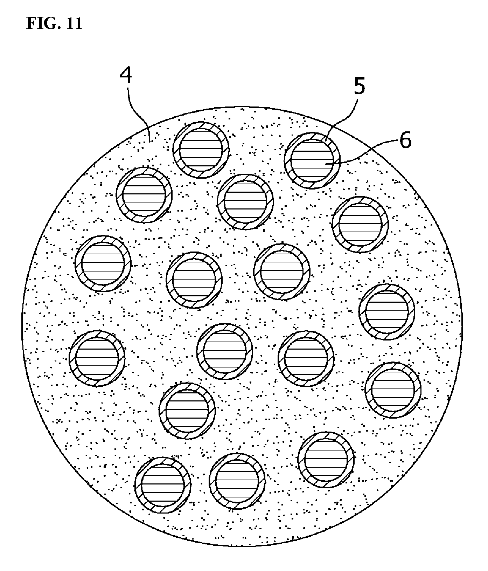

FIG. 11 is a schematic diagram of the sea-island fiber. Referring to FIG. 11, the sea-island fiber consists of a sea region 4 consisting of a PVDF-based polymer, and an island region with a core-shell structure, wherein the island region may include a core 6 consisting of a PAN-based polymer, and a shell 5 surrounding the core and consisting of PSSQ.

In one embodiment, the organic-inorganic composite layer may have a tensile strength of 600 kgf/cm² or more, for example, 1000 kgf/cm² or more, for example, 1000 to 2000 kgf/cm². Within the above range, the mechanical strength of the electrode may be improved.

The fiber may improve the electrolyte wettability of the organic-inorganic composite layer by including the PVDF-based polymer, the PAN-based polymer, and the PSSQ. The fiber may improve the improved electrolyte wettability by further adding an inorganic component PSSQ to the organic components, the PVDF-based polymer and the PAN-based polymer. It can be considered that, as the fiber is prepared through electrospinning, electrolyte wettability may be improved, but the PSSQ can further improve the electrolyte wettability of the organic-inorganic composite layer due to its Si-O bond. However, the present disclosure is not limited thereto.

In one embodiment, the organic-inorganic composite layer may have an electrolyte wetting rate of 5.0 mm²/s or more, 7.5 mm²/s or more, for example, 7.5 to 10 mm²/s. Within the above range, the impregnation property of the organic-inorganic composite layer in the battery can be improved.

The fiber may impart a shutdown effect by including the PVDF-based polymer, the PAN-based polymer, and the PSSQ. The organic-inorganic composite layer includes pores as described above. Accordingly, when the battery is at high temperature, the PVDF-based polymer can melt and block the pores, thereby providing a shutdown effect. As described above, the fiber including a PVDF-based polymer, a PAN-based polymer and PSSQ is a sea-island fiber, wherein the sea region is composed of the PVDF-based polymer. Therefore, at high temperature, the PVDF-based polymer rapidly melts, thereby further increasing the shutdown effect.

In this embodiment, the electrode may be applied to a battery having an electrolyte containing a carbonate-based solvent. The PVDF-based polymer may readily provide a shutdown effect by swelling and melting when left at high temperature in a carbonate-based electrolyte.

As the fiber includes the PVDF-based polymer, the PAN-based polymer, and the PSSQ, the organic-inorganic composite layer may provide improved adhesion to the active material layer. As described above, a fiber including a PVDF-based polymer, a PAN-based polymer, and PSSQ is a sea-island fiber, wherein the sea region is composed of the PVDF-based polymer. Therefore, as the PVDF-based polymer is included in the sea region of the fiber, improved adhesion can be provided. Particularly, the fiber may increase adhesion to the positive electrode active material layer, which includes a PVDF-based binder as a binder.

In one embodiment, the PSSQ may have crosslinkable functional groups. The crosslinkable functional groups may be crosslinked with each other during the process of preparing an organic-inorganic composite layer to increase the degree of bonding between fibers and bonding with an electrode plate, resulting in a significant increase in adhesion.

In one embodiment, the organic-inorganic composite layer may have a dry adhesion to the active material layer for a rechargeable battery of 0.7 gf/mm or more, 1.1 gf/mm or more, 1.2 gf/mm or more, for example, 1.2 to 5 gf/mm. In one embodiment, the organic-inorganic composite layer may have a wet adhesion to the active material layer for a rechargeable battery of 0.6 gf/mm or more, 1.4 gf/mm or more, for example, 1.4 to 5 gf/mm.

As the fiber includes the PVDF-based polymer, the PAN-based polymer, and the PSSQ, the heat resistance of the organic-inorganic composite layer may increase. The PSSQ includes an inorganic component, Si. Accordingly, it may further enhance heat resistance compared to a fiber containing only a PVDF-based polymer and a PAN-based polymer as organic components.

In one embodiment, the PSSQ may have crosslinkable functional groups. The crosslinkable functional groups may be crosslinked with each other during the process of preparing an organic-inorganic composite layer to fix the structure of the fiber, resulting in a significant increase in heat resistance of the organic-inorganic composite layer.

In one embodiment, the organic-inorganic composite layer may have a thermal shrinkage rate in an electrolyte in each of the machine direction (MD) and the transverse direction (TD) of 5% or less, for example, 0 to 3%.

Here, the MD shrinkage rate may be 5% or less, for example, 0 to 3%, and the TD shrinkage rate may be 5% or less, for example, 0 to 3%.

Hereinafter, each component included in the fiber is described in detail.

### PVDF-based polymer

The PVDF-based polymer may be a homopolymer or copolymer of a monomer mixture including vinylidene fluoride.

In one embodiment, the polymer may be PVDF. In another embodiment, the polymer may be a copolymer of a monomer mixture including vinylidene fluoride, and a comonomer, for example, PVDF-hexafluoropropylene (PVDF-HPF).

The PVDF-based polymer may have a weight average molecular weight of 100,000 to 500,000 g/mol, for example, 100000, 110000, 120000, 130000, 140000, 150000, 160000, 170000, 180000, 190000, 200000, 210000, 220000, 230000, 240000, 250000, 260000, 270000, 280000, 290000, 300000, 310000, 320000, 330000, 340000, 350000, 360000, 370000, 380000, 390000, 400000, 410000, 420000, 430000, 440000, 450000, 460000, 470000, 480000, 490000, or 500000 g/mol, or 150,000 to 500,000 g/mol. Within the above range, it can be easy to adjust the viscosity of the electrospinning solution.

### PAN-based polymer

The PAN-based polymer may be a homopolymer or copolymer of a monomer mixture including acrylonitrile.

In one embodiment, the polymer may be PAN. The PAN-based polymer may have a weight average molecular weight of 100,000 to 300,000 g/mol, for example, 100000, 110000, 120000, 130000, 140000, 150000, 160000, 170000, 180000, 190000, 200000, 210000, 220000, 230000, 240000, 250000, 260000, 270000, 280000, 290000, or 300000 g/mol, or 100,000 to 200,000 g/mol. Within the above range, it can be easy to adjust the viscosity of the electrospinning solution.

### PSSQ

The PSSQ may include an alkyl group (R) bonded to silicon of the backbone.

The alkyl group of the PSSQ may be a substituted or unsubstituted aromatic group. The substituted or unsubstituted aromatic group may further provide a dimension stability effect by maintaining the spacing between the molecular chains of the PSSQ, thereby preventing the volume of the organic-inorganic composite layer from changing even when crosslinking progresses. Here, the "substituted or unsubstituted aromatic group" may refer to a substituted or unsubstituted C6 to C10 monocyclic or heterocyclic aromatic group. Here, "substituted or unsubstituted" may mean that one or more hydrogen atoms of the functional group are substituted with a C1 to C10 alkyl, a halogen, a hydroxyl group, an amino group, or a C6 to C10 aryl group. For example, the substituted or unsubstituted aromatic group may be a phenyl group. For example, the substituted or unsubstituted aromatic group may be bonded to silicon of the PSSQ.

The PSSQ may be a random type, a ladder type, a cage type or a partial cage type. For example, the PSSQ may be a ladder type.

The PSSQ may include a silicon-based compound with a unit of Chemical Formula 6 below:

[Chemical Formula 6] [R'SiO_{3/2}]ₙ

(In Chemical Formula 6,
R' is hydrogen, a hydroxyl group, a C1 to C20 alkyl group, a C2 to C20 alkenyl group, a C2 to C20 alkynyl group, a C3 to C20 cycloalkyl group, a C6 to C20 aryl group, a C7 to C20 arylalkyl group, a crosslinkable functional group, or a combination thereof, and n is the number of moles of the unit).

n may be 1 to 1,000,000.

In one embodiment, the PSSQ is a ladder type, and represented by Chemical Formula 7 below, but the present disclosure is not limited thereto: 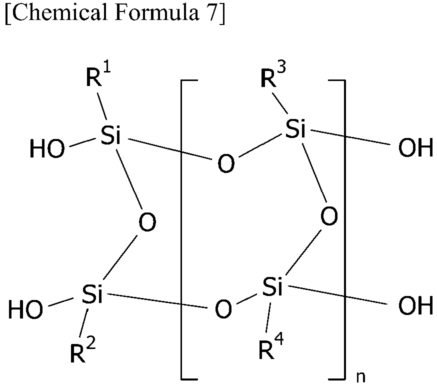 (In Chemical Formula 7,
R¹, R², R³, and R⁴ are each independently hydrogen, a hydroxyl group, a C1 to C20 alkyl group, a C2 to C20 alkenyl group, a C2 to C20 alkynyl group, a C3 to C20 cycloalkyl group, a C6 to C20 aryl group, a C7 to C20 arylalkyl group, a crosslinkable functional group, or a combination thereof, and n is the number of moles of the unit.).

n may be 1 to 1,000,000.

In one embodiment, the PSSQ may have crosslinkable functional groups. At least some of the crosslinkable functional groups may be crosslinked in the process of forming the organic-inorganic composite layer. This can further increase the strength, adhesion, and heat resistance of the organic-inorganic composite layer by increasing the degree of bonding between PSSQs in the same fiber.

In one embodiment, the fiber may at least include a crosslinked product of the PSSQ with crosslinkable functional groups.

The crosslinkable functional group may be a functional group capable of being crosslinked by heat and/or light. For example, the crosslinkable functional group may include one or more of an epoxy group, a glycidyl group, a glycidoxy group, and a glycidoxyalkyl group.

The crosslinkable functional group may be represented by Chemical Formula 4, but the present disclosure is not limited thereto:
The crosslinkable functional group may be included at any location in the PSSQ. For example, the crosslinkable functional group may be included at the end of the PSSQ.

In one embodiment, the PSSQ is a ladder type and may be represented by Chemical Formula 8 below, but the present disclosure is not limited thereto. 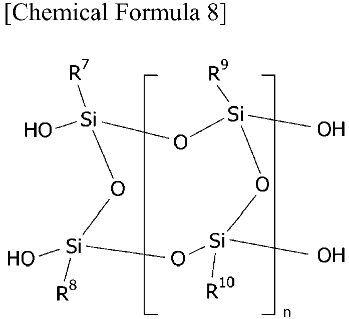 (In Chemical Formula 8,
R⁷, R⁸, R⁹, and R¹⁰ are each independently hydrogen, a hydroxyl group, a C1 to C20 alkyl group, a C2 to C20 alkenyl group, a C2 to C20 alkynyl group, a C3 to C20 cycloalkyl group, a C6 to C20 aryl group, a C7 to C20 arylalkyl group, a crosslinkable functional group, or a combination thereof,
at least one of R⁷, R⁸, R⁹, and R¹⁰ is a crosslinkable functional group, and
n is the number of moles of the above unit).

n may be 1 to 1,000,000.

In Chemical Formula 8, the crosslinkable functional group may be the same as defined in Chemical Formula 4.

In one embodiment, the crosslinkable functional groups in Chemical Formula 8 may be 20 to 50 mol%, and for example, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 mol%, or 30 to 50 mol% of the total functional groups of the silicon. Within the above range, the organic-inorganic composite layer can have an effect of improving adhesion and heat resistance.

In Chemical Formula 8, R⁷, R⁸, R⁹, and R¹⁰ are each independently a hydroxyl group, a C6 to C20 aryl group, a crosslinkable functional group, or a combination thereof, and at least one of R⁷, R⁸, R⁹, and R¹⁰ may be a crosslinkable functional group.

The PSSQ may have a weight average molecular weight of 5,000 to 30,000 g/mol, for example, 5000, 6000, 7000, 8000, 9000, 10000, 11000, 12000, 13000, 14000, 15000, 16000, 17000, 18000, 19000, 20000, 25000, or 30000 g/mol, or 10,000 to 20,000 g/mol. Within the above range, it can be easy to adjust the viscosity of the PSSQ.

The PVDF-based polymer and the PAN-based polymer may be included in a ratio of 50 to 90 parts by weight:10 to 50 parts by weight, for example, 50:50, 55:45, 60:40, 65:35, 70:30, 75:25, 80:20, 85:15, 90:10, 60 to 90 parts by weight: 10 to 40 parts by weight with respect to 100 parts by weight of the total of the PVDF-based polymer and the PAN-based polymer. Within the above range, it can be easy to achieve the effects of the organic-inorganic composite layer.

The PSSQ may be included at 5 to 50 parts by weight, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 parts by weight, or 10 to 30 parts by weight with respect to 100 parts by weight of the total of the PVDF-based polymer and the PAN-based polymer. Within the above range, it can be easy to achieve the effects of the organic-inorganic composite layer.

In one embodiment, the total of the PVDF-based polymer, the PAN-based polymer, and the PSSQ in the fiber may be 95 wt% or more, for example, 95 to 100 wt%.

The thickness of the organic-inorganic composite layer may be 1 to 20 µm, for example, 1 to 10 µm. Within the above range, the organic-inorganic composite layer can be used in the battery.

The organic-inorganic composite layer may be formed by forming a layer containing fibers on at least one surface of the active material layer, and drying the layer containing fibers.

First, the layer containing fibers is formed on at least one surface of the active material layer.

According to one embodiment, the layer containing fibers may be prepared by electrospinning of a solution for forming the layer containing fibers on one surface of the active material layer. The solution may include the PVDF-based polymer, the PAN-based polymer, and PSSQ.

The electrospinning may be performed by positioning one nozzle pack consisting of tips with a needle size of 23 to 30 gauge (G) and a collector roller at a certain interval, injecting the solution into the nozzle pack, placing the active material layer on the collector roller, and applying a voltage of 35 to 90 kV to the tip. The distance between the nozzle pack and the active material layer may be 10 to 20 cm. When the needle size of the tip is 25 to 30G, it is preferable because an organic-inorganic composite layer can be formed in a desired shape.

During the electrospinning process, the solution is spun and stretched into a fiber shape, so that the layer containing fibers can be formed on the active material layer. The solution hangs in the form of a droplet due to surface tension at the end of the tip, and when a voltage is applied, charges accumulate on the surface of the solution and a repulsive force is generated. When the critical voltage is reached where the repulsive force between charges becomes higher than the surface tension of the solution, a Taylor cone is generated, and a polymer solution jet is ejected from the tip of the cone and is highly elongated to form fibers, which are collected on the active material layer to form the layer containing nanofibers.

According to one embodiment, the electrospinning process may be performed at 20 to 30 °C and a relative humidity of 40 to 60%. When the electrospinning process is performed under the above-mentioned temperature and relative humidity conditions, there is an advantage of maintaining a constant fiber diameter while spinning.

An electrospinning speed may be adjusted to form an organic-inorganic composite layer to an appropriate thickness, and may be, for example, 1 to 3 m/min. In addition, the flow rate of the solution discharged from the tip may be adjusted to range from 20 to 1000 µL/min (e.g., 20 to 200 µL/min).

The solution may further include an initiator for promoting crosslinking of the PSSQ with crosslinkable functional groups. The initiator may include one or more of a thermal initiator and a photoinitiator. The thermal initiator and the photoinitiator may be conventional types known to those of ordinary skill in the art.

The solution may further include a solvent, and the solvent may include, for example, dimethylacetamide, dimethylsulfoxide, dimethylformamide, tetrahydrofuran, carbon tetrachloride, methylpyrrolidone, water, ethanol, acetone, or a combination thereof. The solvent may be included as a fine residue in the organic-inorganic composite layer.

The content of the mixture of the PVDF-based polymer, the PAN-based polymer and the PSSQ in the solution may be 5 to 20 wt% with respect to a total of 100 wt% of the solution. Within the above range, the organic-inorganic composite layer may be formed to an appropriate thickness.

After the electrospinning process, a solvent removal process may be performed at 80 to 120 °C.

Subsequently, after the electrospinning process, an organic-inorganic composite layer may be formed by drying the layer containing fibers. The drying may be suitably adjusted depending on the boiling point of the solvent.

The organic-inorganic composite layer may be formed by crosslinking the layer containing fibers.

The crosslinking may be performed by thermally treating the layer containing fibers under predetermined conditions. For example, the thermal treatment may be performed in a vacuum at 50 to 200 °C, for example, 50 to 150 °C, for 5 to 180 minutes.

The layer containing fibers may be hot-pressed before or after drying and/or crosslinking. The hot-pressing may increase the density between fibers in the layer containing fibers, and reduce the thickness of the organic-inorganic composite layer. According to one embodiment, the hot-pressing may be performed by pressing the layer containing fibers at 70 °C or more, for example, 70 to 150 °C, under a pressure of 0.1 to 1 MPa.

### Active material layer for a rechargeable lithium battery

The active material layer for a rechargeable lithium battery may be a positive electrode active material layer or a negative electrode active material layer. For example, the active material layer for a rechargeable lithium battery may be a negative electrode active material layer.

Since the active material layer for a rechargeable lithium battery is substantially the same as the active material layer described in 'First electrode for rechargeable lithium battery,' a detailed description thereof is omitted.

### Fourth electrode for rechargeable lithium battery

The electrode for a rechargeable lithium battery (hereinafter, also referred to as an "electrode") includes an active material layer for a rechargeable lithium battery; and a multilayer organic-inorganic composite layer integrated with the active material layer. The multilayer organic-inorganic composite layer includes a first organic-inorganic composite layer and a second organic-inorganic composite layer, wherein the difference between the content of PSSQ in the first organic-inorganic composite layer and the content of PSSQ in the second organic-inorganic composite layer is 10 wt% or more.

### Multilayer organic-inorganic composite layer

The multilayer organic-inorganic composite layer may serve as a separator that is located between the active material layer for a rechargeable lithium battery and an electrode facing the same and prevents a short circuit.

A rechargeable lithium battery including the electrode may not include a separate separator. Accordingly, the electrode does not need a lamination process for combining a separator and an electrode during the manufacture of a battery such as a stacked cell, making it possible to manufacture a battery in a simpler and more economical process. In addition, the electrode has no thermal shrinkage problem caused by a conventional separator, thereby increasing the stability and lifespan of the battery.

The organic-inorganic composite layer may be integrated with the active material layer for a rechargeable lithium battery. Here, "integration" may refer to a state in which an organic-inorganic composite layer is directly formed on the active material layer without intervention of any other layer, that is, an organic-inorganic composite layer is more firmly bonded to the active material layer.

The integration of the active material layer and the organic-inorganic composite layer may be confirmed using a scanning electron microscope (SEM) or a transmission electron microscope (TEM). According to one embodiment, the SEM or TEM results clearly show that the active material layer can be distinguished from the organic-inorganic composite layer, but the interface (boundary) between them is not clearly defined and appears uneven.

The multilayer organic-inorganic composite layer may have a structure in which a plurality of organic-inorganic composite layers are stacked in the thickness direction of the composite layer. Here, each organic-inorganic composite layer may be a monolayer. Here, "monolayer" may mean that organic and inorganic components are not included in separate layers but formed in one layer.

The organic-inorganic composite layer may be integrated with a neighboring organic-inorganic composite layer. Here, "integration" may be the same as the concept described above.

The multilayer organic-inorganic composite layer may include two or more organic-inorganic composite layers, for example, 2 to 8 organic-inorganic composite layers. For example, the multilayer organic-inorganic composite layer includes 4 to 8 organic-inorganic composite layers. More for example, the multilayer organic-inorganic composite layer includes 4 organic-inorganic composite layers. When the multilayer organic-inorganic composite layer includes four organic-inorganic composite layers, the effects to be provided by each organic-inorganic composite layer can be sufficiently achieved even when the composite layer is hot-pressed. Each organic-inorganic composite layer in the multilayer organic-inorganic composite layer may be distinguished from each other through energy dispersive X-ray spectroscopy (EDAX), but the present disclosure is not limited thereto.

In the organic-inorganic composite layers of the multilayer organic-inorganic composite layer, the content of PSSQ may be the same as or different.

The multilayer organic-inorganic composite layer includes a first organic-inorganic composite layer and a second organic-inorganic composite layer, wherein the first organic-inorganic composite layer and the second organic-inorganic composite layer have different contents of PSSQ. The difference in PSSQ content between the first organic-inorganic composite layer and the second organic-inorganic composite layer is 10 wt% or more.

The lower the air permeability of the multilayer organic-inorganic composite layer, the lower the compression force against foreign substances. The compression force against foreign substances means a load that causes a short circuit between the positive and negative electrodes when foreign substances are forcibly introduced onto the multilayer organic-inorganic composite layer and then compressed. Although not always the case, improved air permeability and improved compression force against foreign substances may have a trade-off relation. Conversely, as the difference in PSSQ content in the multilayer organic-inorganic composite layer is 10 wt% or more, the air permeability of the multilayer organic-inorganic composite layer may also be improved, and the stability against foreign substances thereof may also be improved.

When the air permeability of the multilayer organic-inorganic composite layer is reduced, lithium ion migration may be reduced, thereby lowering the resistance of the battery. When the stability of the multilayer organic-inorganic composite layer against foreign substances increases, the cell defect rate caused by foreign substances can be lowered during the manufacture of a rechargeable lithium battery such as a stacked cell, or the electrode volume expansion during charging and discharging can be lowered.

The PSSQ, as an inorganic component, may increase the toughness of the organic-inorganic composite layer. However, when the PSSQ content in each organic-inorganic composite layer of the multilayer organic-inorganic composite layer is equal, each layer may have similar toughness, and fracture (failure) behavior may occur, thereby lowering the compression force against foreign substances. In the present disclosure, by adjusting the difference in PSSQ content between the first and second organic-inorganic composite layers to 10 wt% or more, failure is delayed by exhibiting different failure behaviors caused by foreign substances in each layer, and frictional delamination between the layers increases resistance to penetration via foreign substances. Therefore, the compression force against foreign substances may increase and also improve air permeability.

The difference in PSSQ content between the first and second organic-inorganic composite layers may be 10 to 50 wt%, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 wt%, 10 to 30 wt%, or 10 to 20 wt%. Within the above range, physical properties other than air permeability and the compression force against foreign substances are not affected, and the air permeability and compression force may be readily improved.

The second organic-inorganic composite layer may have a higher PSSQ content than the first organic-inorganic composite layer. In one embodiment, the second organic-inorganic composite layer may contain PSSQ at 10 wt% or more, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 wt%, 10 to 50 wt%, for example, 15 to 30 wt%, or 20 to 30 wt%. In one embodiment, in the first organic-inorganic composite layer, the PSSQ content may be 0 wt% or more, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 wt%, 1 to 40 wt%, for example, 5 to 20 wt%, or 10 to 20 wt%.

The second organic-inorganic composite layer may be integrated with the active material layer for a rechargeable lithium battery, and the active material layer for a rechargeable lithium battery may be a negative electrode active material layer.

The PSSQ content in the multilayer organic-inorganic composite layer may be 10 to 50 wt%, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 wt%, 10 to 30 wt% or 15 to 30 wt%, for example, 20 to 30 wt%. Within the above range, the effect of improving air permeability and compression force against foreign substances can be achieved.

The thickness of the multilayer organic-inorganic composite layer may be 0.5 to 20 µm, for example, 1 to 15 µm, or for example, 5 to 15 µm. Within the above range, the multilayer organic-inorganic composite layer can be used in the battery.

The stacking form of the first and second organic-inorganic composite layers may not be particularly limited. However, the first and second organic-inorganic composite layers may be alternately stacked. This can provide a complementary effect between the two layers with different PSSQ contents, thereby further improving the effects of the electrode. Particularly, the multilayer organic-inorganic composite layer is hot-pressed during the process of manufacturing a battery, and the hot-pressing can also provide the complementary effect of the two layers.

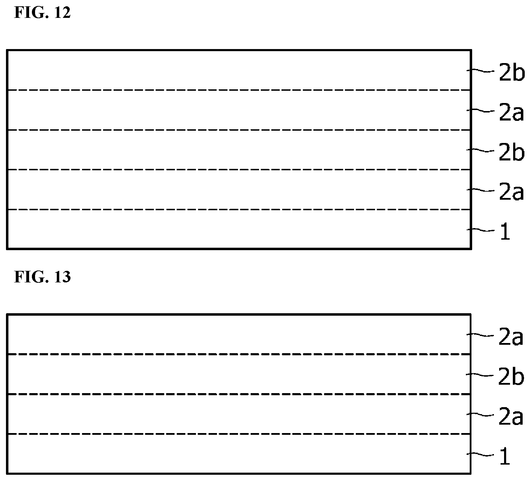

FIGS. 12 to 15 are cross-sectional views of an electrode according to one embodiment, respectively.

Referring to FIG. 12, the electrode may include an active material layer 1 for a rechargeable lithium battery; and a second organic-inorganic composite layer 2a, a first organic-inorganic composite layer 2b, a second organic-inorganic composite layer 2a, and a first organic-inorganic composite layer 2b, which are integrated with one surface of the active material layer 1 and sequentially stacked.

Referring to FIG. 13, the electrode may include an active material layer 1 for a rechargeable lithium battery; and a second organic-inorganic composite layer 2a, a first organic-inorganic composite layer 2b, and a second organic-inorganic composite layer 2a, which are integrated with one surface of the active material layer 1 and sequentially stacked.

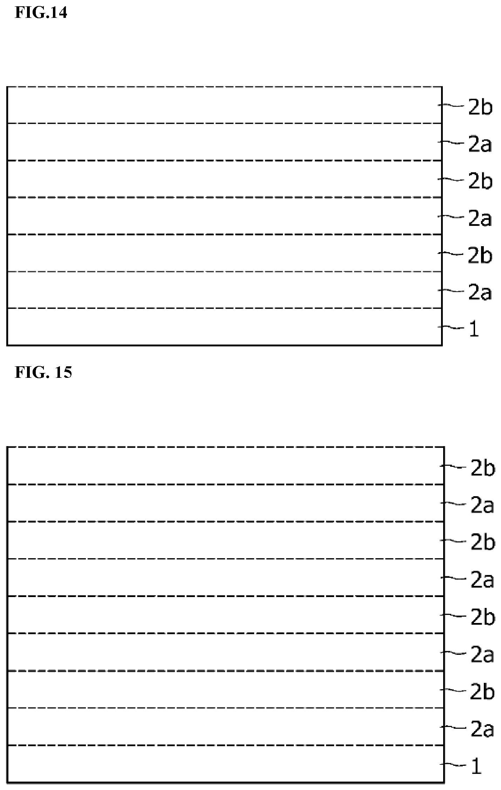

Referring to FIG. 14, the electrode may include an active material layer 1 for a rechargeable lithium battery; and a second organic-inorganic composite layer 2a, a first organic-inorganic composite layer 2b, a second organic-inorganic composite layer 2a, a first organic-inorganic composite layer 2b, a second organic-inorganic composite layer 2a, and a first organic-inorganic composite layer 2b, which are integrated with one surface of the active material layer 1 and sequentially stacked.

Referring to FIG. 15, the electrode may include an active material layer 1 for a rechargeable lithium battery; and a second organic-inorganic composite layer 2a, a first organic-inorganic composite layer 2b, a second organic-inorganic composite layer 2a, a first organic-inorganic composite layer 2b, a second organic-inorganic composite layer 2a, a first organic-inorganic composite layer 2b, a second organic-inorganic composite layer 2a, and a first organic-inorganic composite layer 2b, which are integrated with one surface of the active material layer 1 and sequentially stacked.

In FIGS. 12 to 15, it is shown that the active material layer 1 for a rechargeable lithium battery, the second organic-inorganic composite layer 2a, the first organic-inorganic composite layer 2b, and the second organic-inorganic composite layer 2a are formed in separate layers, but the dotted line indicates that each layer is integrated.

The multilayer organic-inorganic composite layer may include only the first organic-inorganic composite layer and the second organic-inorganic composite layer. However, the multilayer organic-inorganic composite layer may further include a third organic-inorganic composite layer. The PSSQ content of the third organic-inorganic composite layer may differ from those of the first organic-inorganic composite layer and the second organic-inorganic composite layer.

At least one of the first organic-inorganic composite layer and the second organic-inorganic composite layer may include a fiber containing the PSSQ. In this case, it can be easy to improve the air permeability of the multilayer organic-inorganic composite layer.

In one embodiment, the first organic-inorganic composite layer, the second organic-inorganic composite layer, and the third organic-inorganic composite layer may each include the fiber containing PSSQ. Therefore, hereinafter, description is limited to the case in which the composite layer includes fiber containing PSSQ.

### Organic-inorganic composite layer

The organic-inorganic composite layer may include a fiber containing PSSQ, and have a non-woven type, for example, a network structure of fiber. The network structure may have an advantage for minimizing resistance during lithium ion migration. The network structure may mean a porous layer in which pores are randomly formed between the fibers. According to one embodiment, the diameter of the pore may be 90 nm or less, for example, 10 to 90 nm.

In one embodiment, the fiber may be a core-shell fiber having a core and a shell surrounding the core. The shell may include the PSSQ with crosslinkable functional groups. The core may include a non-silicon-based polymer to be described below

The fibers may be microfibers or nanofibers, based on their average diameter. In one embodiment, the average diameter of the fibers may range from 300 nm or less, for example, 10 to 200 nm, or 10 to 100 nm. Within the above range, it can be easy to form an organic-inorganic composite layer. Here, the "average diameter" of nanofibers may be an average value calculated from the diameters measured from a plurality of nanofibers (about 100) selected from an SEM image.

The PSSQ can be electrospun as is, as well as homogeneously dispersed in the polymer even when being mixed with a polymer to be described below. Accordingly, the PSSQ may achieve the effects of the organic-inorganic composite layer even at any location therein, thereby increasing reliability.

The PSSQ may include a compound having a T unit with a silicon-bonded monovalent organic group R.

The PSSQ may have a substituted or unsubstituted aromatic group. Since the substituted or unsubstituted aromatic group may maintain the distance between the molecular chains of the PSSQ, even when crosslinking progresses, the volume of the organic-inorganic composite layer does not change, thereby further providing a dimensional stability effect. Here, "substituted or unsubstituted aromatic group" may mean a substituted or unsubstituted C6 to C10 monocyclic or heterocyclic aromatic group. Here, "substituted or unsubstituted" may mean that one or more hydrogen atoms of the functional group are substituted with a C1 to C10 alkyl, a halogen, a hydroxyl group, an amino group, or a C6 to C10 aryl group. For example, the substituted or unsubstituted aromatic group may be a phenyl group. For example, the substituted or unsubstituted aromatic group may be bonded to silicon of the PSSQ.

The PSSQ may be a random type, a ladder type, a cage type or a partial cage type. For example, the PSSQ may be a ladder type.

The PSSQ may include a silicon-based compound having the unit of Chemical Formula 6:

The PSSQ is a ladder type, and may be represented by Chemical Formula 7, but the present disclosure is not limited thereto:
In one embodiment, the PSSQ may have crosslinkable functional groups. At least some of the crosslinkable functional groups may be crosslinked to each other in the process of forming an organic-inorganic composite layer. This can further increase the strength, adhesion, and heat resistance of the organic-inorganic composite layer by increasing the bonding degree between PSSQs in the same fiber.

In one embodiment, the fiber may include at least a crosslinked product of the PSSQ with crosslinkable functional groups.

The crosslinkable functional group may be a functional group that can be crosslinked by heat and/or light. For example, the crosslinkable functional group may include one or more of a (meth)acryl group, a (meth)acryloxy group, a (meth)acryloxyalkyl group, an epoxy group, a glycidyl group, a glycidoxy group, and a glycidoxyalkyl group.

In one embodiment, the crosslinkable functional group may be represented by Chemical Formula 4, but the present disclosure is not limited thereto:
The crosslinkable functional group may be included at any location in the PSSQ. For example, the crosslinkable functional group may be included at the end of the PSSQ.

In one embodiment, the PSSQ is a ladder type, and may be represented by Chemical Formula 8, but the present disclosure is not limited thereto.

In Chemical Formula 8, the crosslinkable functional group may be the same as defined in Chemical Formula 4.

In one embodiment, in Chemical Formula 4, the crosslinkable functional groups may be included at 20 to 50 mol%, for example, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 mol%, or 30 to 50 mol% of the total functional groups of the silicon. Within the above range, the adhesion and heat resistance of the organic-inorganic composite layer can be improved.

In Chemical Formula 8, R⁷, R⁸, R⁹, and R¹⁰ are each independently a hydroxyl group, a C6 to C20 aryl group, a crosslinkable functional group, or a combination thereof, and at least one of R⁷, R⁸, R⁹, and R¹⁰ may be a crosslinkable functional group.

The PSSQ may have a weight average molecular weight of 5,000 to 30,000 g/mol, for example, 5000, 6000, 7000, 8000, 9000, 10000, 11000, 12000, 13000, 14000, 15000, 16000, 17000, 18000, 19000, 20000, 25000, or 30000 g/mol, or 10,000 to 20,000 g/mol. Within the above range, it can be easy to adjust the viscosity of the PSSQ. In the specification, the weight average molecular weight may be obtained as a polystyrene standard conversion value by gel permeation chromatography.

The PSSQ content in the fiber may be substantially the same as described above.

The polymer can be readily electrospun and its type is not limited as long as it does not affect the dispersion and function of the PSSQ. For example, the polymer may be a non-silicon-based polymer, and may include PVDF, PAN, PAI, PVP, PAA, PVA, or a combination thereof. The PSSQ content of the multilayer organic-inorganic composite layer may be in a range of 10 to 30 wt% with respect to 100 parts by weight of the polymer.

In one embodiment, the polymer may include a PVDF-based polymer and a PAN-based polymer. That is, the fiber may include a PVDF-based polymer, a PAN-based polymer, and PSSQ.

The PSSQ may be homogeneously distributed in the fiber when mixed with the PVDF-based polymer and the PAN-based polymer and formed into a fiber through electrospinning, thereby significantly increasing the tensile strength of the organic-inorganic composite layer.

The fiber may be formed as a sea-island fiber by including a PVDF-based polymer, a PAN-based polymer, and PSSQ. Specifically, the sea-island fiber includes a sea region, and a plurality of island regions included in the sea region.

The sea region may consist of the PVDF-based polymer. The island region may have a core-shell structure having a core consisting of the PAN-based polymer and a shell that surrounds the core and consists of the PSSQ. The sea-island fiber can significantly improve the tensile strength of the organic-inorganic composite layer by increasing the interactions between the three components compared to the fiber including the PVDF-based polymer, the PAN-based polymer, and PSSQ as separate components. The specific mechanism by which the combination of the PVDF-based polymer, the PAN-based polymer, and the PSSQ forms sea-island fibers when electrospun has not been elucidated. However, it is thought that this results from the specific combination of the above three components, but the present disclosure is not limited thereto.

In the sea-island fiber, the island regions may be randomly disposed in the sea region. For example, the area ratio of the island regions in the cross-section of the sea-island fiber may be 30 to 70%, for example, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, or 70 wt%, 30 to 50% or 40 to 60%. Within the above range, it can be easy to achieve the effects of the organic-inorganic composite layer. The area ratio of the island regions may mean the ratio of the total area of the island regions with respect to the area of the cross-section of the fiber.

The sea-island fiber may be detected by scanning transmission electron microscope-energy dispersive spectroscopy (STEM-EDS).

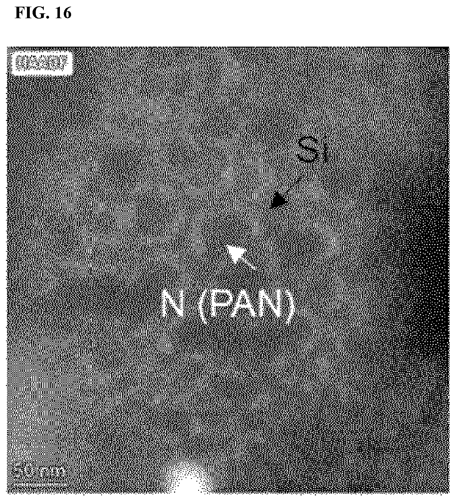

FIG. 16 shows the HAADF-STEM results for the fiber. Referring to FIG. 16, the PAN core and silicon surrounding the core can be confirmed.

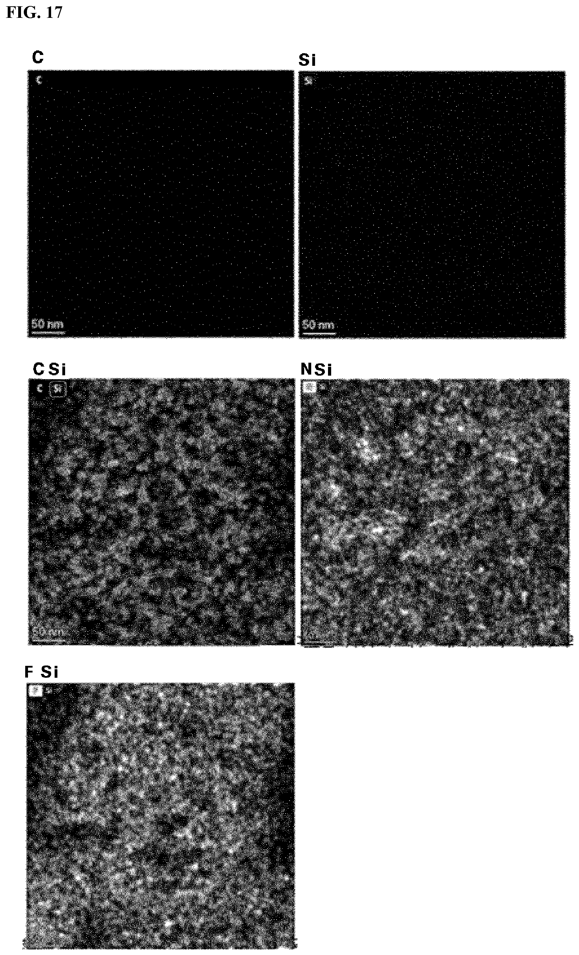

FIG. 17 shows the TEM-EDS results for the fiber. Referring to FIG. 17, it can be confirmed that the fiber included in the organic-inorganic composite layer is a sea-island fiber.

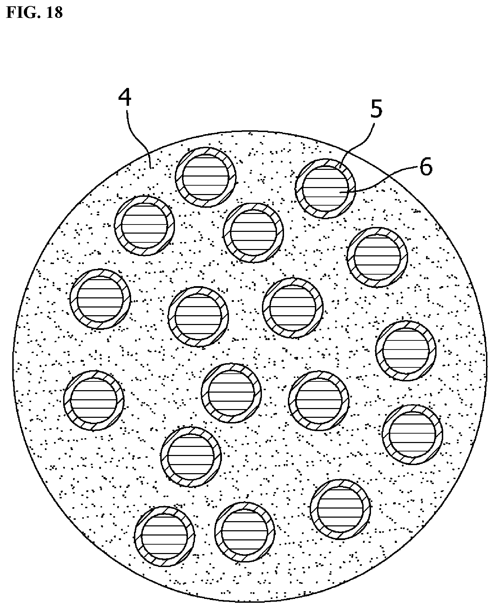

FIG. 18 is a schematic diagram of the sea-island fiber. Referring to FIG. 18, the sea-island fiber includes a sea region 4 consisting of a PVDF-based polymer and an island region with a core-shell structure, wherein the island region may include a core 6 consisting of a PAN-based polymer and a shell 5 surrounding the core and consisting of PSSQ.

In one embodiment, the organic-inorganic composite layer may have a tensile strength of 1000 kgf/cm² or more, for example, 1000 to 2000 kgf/cm². Within the above range, the multilayer organic-inorganic composite layer can also have improved tensile strength, and thus the electrode can have improved mechanical strength.

As the fiber includes the PVDF-based polymer, the PAN-based polymer and the PSSQ, the electrode wettability of the organic-inorganic composite layer can be improved, and thus the electrode wettability of the multilayer organic-inorganic composite layer can be improved.

In the fiber, the inorganic component PSSQ is further added to the organic components, such as the PVDF-based polymer and the PAN-based polymer, thereby exhibiting improved electrode wettability. Since the fiber is electrospun, electrode wettability can be improved. However, since the PSSQ has a Si-O bond, it is considered that the electrode wettability of the organic-inorganic composite layer can be further improved, but the present disclosure is not limited thereto.

In one embodiment, the organic-inorganic composite layer may have an electrolyte wetting rate of 7.5 mm²/s or more, for example, 7.5 to 10 mm²/s. Within the above range, the electrode wettability of the multilayer organic-inorganic composite layer can be improved.

The fiber may provide a shutdown effect by including the PVDF-based polymer, the PAN-based polymer, and the PSSQ. The organic-inorganic composite layer includes pores as described above. Accordingly, when the battery is at high temperature, the PVDF-based polymer can melt and block the pores, thereby providing a shutdown effect. As described above, the fiber including a PVDF-based polymer, a PAN-based polymer and PSSQ is a sea-island fiber, wherein the sea region is composed of the PVDF-based polymer. Therefore, at high temperature, the PVDF-based polymer rapidly melts, thereby further increasing the shutdown effect. Accordingly, the multilayer organic-inorganic composite layer may also provide the shutdown effect.

In one embodiment, the electrode can be applied to a battery having an electrolyte containing a carbonate-based solvent. The PVDF-based polymer may readily provide a shutdown effect by swelling and melting when left at high temperature in a carbonate-based electrolyte.

As the fiber includes the PVDF-based polymer, the PAN-based polymer, and the PSSQ, the organic-inorganic composite layer can impart improved adhesion to the active material layer. As described above, the fiber including the PVDF-based polymer, the PAN-based polymer, and the PSSQ is a sea-island fiber, wherein the sea region consists of a PVDF-based polymer. Accordingly, since the PVDF-based polymer is included in the sea region of the fiber, improved adhesion can be provided. Particularly, the fiber may increase the adhesion to the positive electrode active material layer including a PVDF-based binder as a binder. Therefore, the multilayer organic-inorganic composite layer may also provide improved adhesion to the active material layer.

In one embodiment, the PSSQ may have crosslinkable functional groups. The crosslinkable functional groups may be crosslinked with each other in the process of preparing an organic-inorganic composite layer to increase the bonding degree between the fibers and with an electrode plate, thereby significantly increasing adhesion.

In one embodiment, the organic-inorganic composite layer may have a dry adhesion to the active material layer for a rechargeable battery of 1.2 gf/mm or more, for example, 1.2 to 5 gf/mm. In one embodiment, the organic-inorganic composite layer may have a wet adhesion to the active material layer for a rechargeable battery of 1.4 gf/mm or more, for example, 1.4 to 5 gf/mm.

Since the fiber includes the PVDF-based polymer, the PAN-based polymer, and the PSSQ, the heat resistance of the organic-inorganic composite layer may increase. Accordingly, the multilayer organic-inorganic composite layer may also have improved heat resistance. The PSSQ includes the inorganic component Si. Therefore, the fiber of the present disclosure can impart a higher heat resistance than the fiber including only a PVDF-based polymer and a PAN-based polymer as organic components.

In one embodiment, the PSSQ may have crosslinkable functional groups. The crosslinkable functional groups may be crosslinked with each other in the process of preparing an organic-inorganic composite layer to fix the structure of the fiber, thereby significantly increasing the heat resistance of the organic-inorganic composite layer.

In one embodiment, the organic-inorganic composite layer may have a thermal shrinkage rate in an electrolyte in each of the MD and the TD of 5% or less, for example, 0 to 3%.

Here, the MD shrinkage rate may be 5% or less, for example, 0 to 3%, and the TD shrinkage rate may be 5% or less, for example, 0 to 3%.

The PVDF-based polymer may be a homopolymer or copolymer of a monomer mixture including vinylidene fluoride.

In one embodiment, the polymer may be PVDF.

In another embodiment, the polymer may be a copolymer of a monomer mixture including vinylidene fluoride, and a comonomer, for example, PVDF-HPF.

The PVDF-based polymer may have a weight average molecular weight of 100,000 to 500,000 g/mol, for example, 150,000 to 500,000 g/mol. Within the above range, it can be easy to adjust the viscosity of the electrospinning solution.

The PAN-based polymer may be a homopolymer or copolymer of a monomer mixture including acrylonitrile.

In one embodiment, the polymer may be PAN.

The PAN-based polymer may have a weight average molecular weight of 100,000 to 300,000 g/mol, for example, 100,000 to 200,000 g/mol. Within the above range, it can be easy to adjust the viscosity of the electrospinning solution.

The PVDF-based polymer and the PAN-based polymer may be included at 50 to 90 parts by weight: 10 to 50 parts by weight, for example, 60 to 90 parts by weight: 10 to 40 parts by weigh with respect to 100 parts by weight of the total of the PVDF-based polymer and the PAN-based polymer. Within the above range, it can be easy to achieve the effects of the organic-inorganic composite layer.

The PSSQ may be included at 5 to 50 parts by weight, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 parts by weight, or 10 to 30 parts by weight with respect to 100 parts by weight of the total of the PVDF-based polymer and the PAN-based polymer. Within the above range, it can be easy to achieve the effects of the organic-inorganic composite layer.

In one embodiment, the total of the PVDF-based polymer, the PAN-based polymer and the PSSQ in the fiber may be included at 95 wt% or less, for example, 95 to 100 wt%.

The organic-inorganic composite layer may have a thickness of 1 to 20 µm, for example, 1 to 10 µm. Within the above range, the organic-inorganic composite layer can be used in the battery.

### Preparation of multilayer organic-inorganic composite layer

Hereinafter, a method of preparing a multilayer organic-inorganic composite layer according to one embodiment is described. However, the preparation of the composite layer is not limited to the preparation method to be described below.

The multilayer organic-inorganic composite layer may be prepared by preparing each of an electrospinning solution for a first organic-inorganic composite layer (first electrospinning solution) and an electrospinning solution for a second organic-inorganic composite layer (second electrospinning solution), and alternately electrospinning the first electrospinning solution and the second electrospinning solution onto the surface of the active material layer and drying each solution. Here, the difference in PSSQ content between the first electrospinning solution and the second electrospinning solution is 10 wt% or more.

The electrospinning may be performed by positioning one nozzle pack consisting of a tip with a needle size of 23 to 30 gauge (G) and a collector roller at a certain interval, injecting the solution into the nozzle pack, placing the active material layer on the collector roller, and applying a voltage of 35 to 90 kV to the tip. The distance between the nozzle pack and the active material layer may be 10 to 20 cm. When the needle size of the tip is 25 to 30G, it is preferable because an organic-inorganic composite layer can be formed in a desired shape.

During the electrospinning process, the solution is spun and stretched into a fiber shape, so that the layer containing fibers can be formed on the active material layer. The solution hangs in the form of a droplet due to surface tension at the end of the tip, and when a voltage is applied, charges accumulate on the surface of the solution and a repulsive force is generated. When the critical voltage is reached where the repulsive force between charges becomes higher than the surface tension of the solution, a Taylor cone is generated, and a polymer solution jet is ejected from the tip of the cone and is highly elongated to form fibers, which are collected on the active material layer to form the layer containing fibers.

According to one embodiment, the electrospinning process may be performed at 20 to 30 °C and a relative humidity of 40 to 60%. When the electrospinning process is performed under the above-mentioned temperature and relative humidity conditions, there is an advantage of maintaining a constant fiber diameter while spinning.

An electrospinning speed may be adjusted to form an organic-inorganic composite layer to an appropriate thickness, and may be, for example, 1 to 3 m/min. In addition, the flow rate of the solution discharged from the tip may be adjusted to range from 20 to 1000 µL/min (e.g., 20 to 200 µL/min).

Each of the first electrospinning solution and the second electrospinning solution may further include an initiator for promoting crosslinking of the PSSQ with crosslinkable functional groups. The initiator may include one or more of a thermal initiator and a photoinitiator. The thermal initiator and the photoinitiator may be conventional types known to those of ordinary skill in the art.

The solution may further include a solvent, and the solvent may include, for example, dimethylacetamide, dimethylsulfoxide, dimethylformamide, tetrahydrofuran, carbon tetrachloride, methylpyrrolidone, water, ethanol, acetone, or a combination thereof. The solvent may be included as a fine residue in the organic-inorganic composite layer.

The content of the mixture of the PSSQ and the polymer in the solution may be 5 to 20 wt% with respect to 100 wt% of the total solution. Within the above range, the organic-inorganic composite layer can be formed to an appropriate thickness.

After the electrospinning process, a solvent removal process may be performed at 80 to 20 °C.

The drying may be suitably adjusted according to the boiling point of the solvent.

The organic-inorganic composite layer may be formed by crosslinking the layer including fibers.

The crosslinking may be performed by thermally treating the layer containing fibers under predetermined conditions. For example, the thermal treatment may be performed in a vacuum at 50 to 200 °C, for example, 50 to 150 °C, for 5 to 180 minutes.

The layer containing fibers may be hot-pressed before or after drying and/or crosslinking. The hot-pressing may increase the density between fibers in the layer containing fibers, and reduce the thickness of the organic-inorganic composite layer. According to one embodiment, the hot-pressing may be performed by pressing the layer containing fibers at 70 °C or more, for example, 70 to 150 °C, under a pressure of 0.1 to 1 MPa.

### Active material layer for rechargeable lithium battery

The active material layer for a rechargeable lithium battery may be a positive electrode active material layer or a negative electrode active material layer. For example, the active material layer for a rechargeable lithium battery may be a negative electrode active material layer.

Since the active material layer for a rechargeable lithium battery is substantially the same as the active material layer described in 'First electrode for rechargeable lithium battery,' a detailed description thereof is omitted.

### Electrode assembly for a rechargeable lithium battery

The electrode assembly for a rechargeable lithium battery includes a positive electrode active material layer for a rechargeable lithium battery, a negative electrode active material layer for a rechargeable lithium battery, and the multilayer organic-inorganic composite layer located between the positive electrode active material layer for a rechargeable lithium battery and the negative electrode active material layer for a rechargeable lithium battery.

The multilayer organic-inorganic composite layer, the positive electrode active material layer, and the negative electrode active material layer are substantially the same as described above.

In one embodiment, the second organic-inorganic composite layer may be integrated with the negative electrode active material layer, and the first organic-inorganic composite layer may be integrated with the positive electrode active material layer.

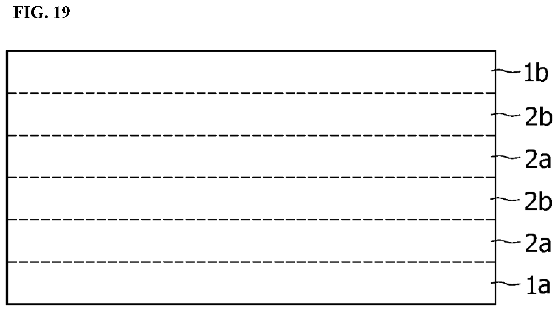

FIG. 19 is a cross-sectional view of an electrode assembly for a rechargeable lithium battery according to one embodiment.

Referring to FIG. 19, the electrode assembly may include a negative electrode active material layer 1a; a multilayer organic-inorganic composite layer including a second organic-inorganic composite layer 2a, a first organic-inorganic composite layer 2b, a second organic-inorganic composite layer 2a, and a first organic-inorganic composite layer 2b, which are sequentially formed on the negative electrode active material layer 1a; and a positive electrode active material layer 1b integrated on the multilayer organic-inorganic composite layer.

### Rechargeable lithium battery

Rechargeable lithium battery comprises the electrode for a rechargeable lithium battery, and another electrode for a rechargeable lithium battery.

In the rechargeable lithium battery, the electrode for the rechargeable lithium battery has different electrical characteristics from another electrode for the rechargeable lithium battery. That is, if the electrode assembly for the rechargeable lithium battery includes a positive electrode for the rechargeable lithium battery, another electrode for the rechargeable lithium battery may be a negative electrode. In addition, if the electrode assembly for the rechargeable lithium battery includes a negative electrode for the rechargeable lithium battery, another electrode for the rechargeable lithium battery may be a positive electrode.

The rechargeable lithium battery may further include an electrolyte solution.

The electrolyte solution for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

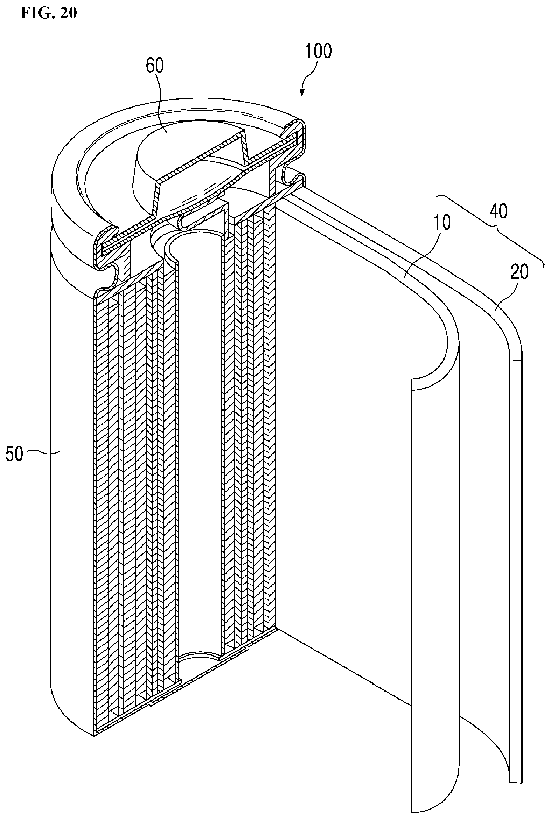

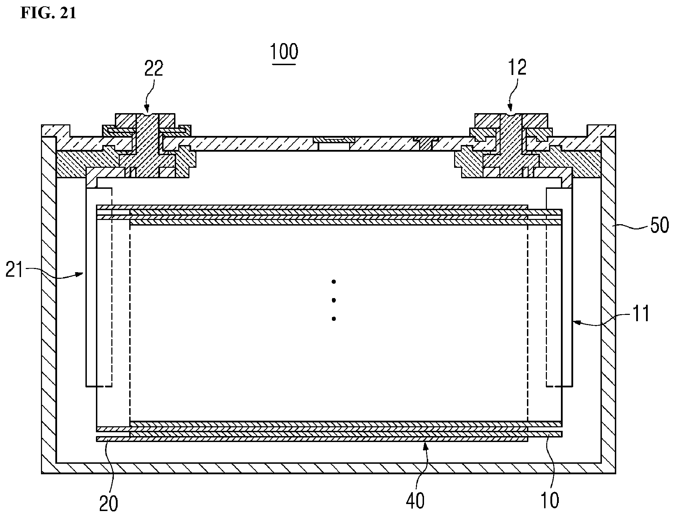

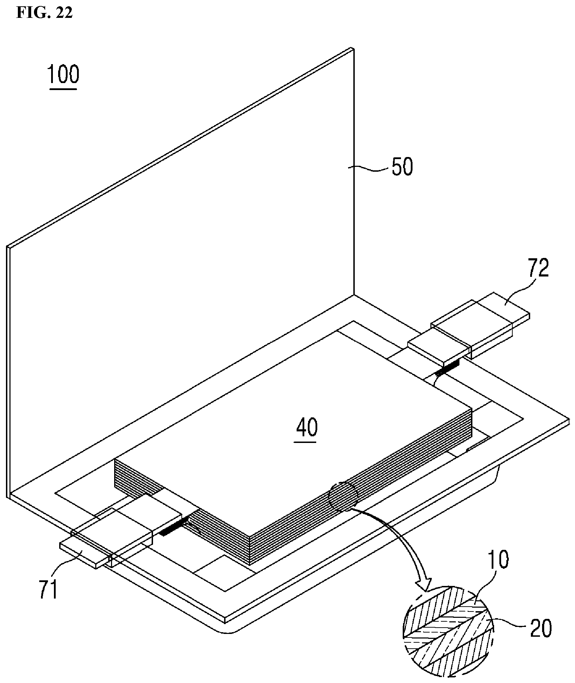

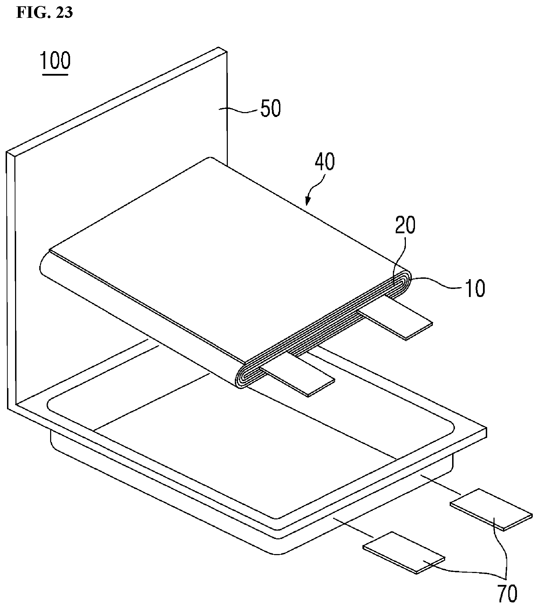

FIGS. 20 to 23 are schematic views illustrating a rechargeable lithium battery according to an embodiment. FIG. 23 shows a cylindrical battery, FIG. 21 shows a prismatic battery, and FIGS. 22 and 23 show pouch-type batteries. Referring to FIGS. 20 to 23, the rechargeable lithium battery 100 may include an electrode assembly 40 including a positive electrode 10; and a negative electrode 20 including an negative electrode active material layer and an organic-inorganic composite layer, and a case 50 in which the electrode assembly 40 is included. The positive electrode 10, and the negative electrode 20 may be impregnated with an electrolyte solution (not shown). The rechargeable lithium battery 100 may include a sealing member 60 sealing the case 50, as shown in FIG. 20. In FIG. 21, the rechargeable lithium battery 100 may include a positive lead tab 11, a positive terminal 12, a negative lead tab 21, and a negative terminal 22. As shown in FIGS. 22 and 23, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to an embodiment may be applied to automobiles, mobile phones, and/or various types of electric devices, as non-limiting examples.

Hereinafter, examples and comparative examples of the present disclosure is described . However, the following examples are merely examples of the present disclosure, and the present disclosure is not limited thereto.

### Example 1

As a positive electrode active material, a positive electrode slurry was prepared by mixing 97.5 wt% of lithium-cobalt oxide, 1.0 wt% of carboxymethyl cellulose, and 1.5 wt% of PVDF in N-methyl-2-pyrrolidone as a solvent. The positive electrode slurry was applied onto aluminum foil, dried, and rolled to form a positive electrode active material layer.

A mixture was prepared by mixing 60 parts by weight of PVDF and 40 parts by weight of PAN. In addition, an electrospinning solution was prepared by adding 20 parts by weight of PSSQ with crosslinkable functional groups (PSSQ with a phenyl group and a methacrylate group) thereto with respect to 100 parts by weight of the mixture, and then dissolving the resulting mixture in dimethylacetamide as a solvent.

A layer including nanofibers (average diameter: 90 nm) was formed by electrospinning the electrospinning solution on the prepared positive electrode active material layer. The electrospinning process was performed as follows:
The electrospinning was performed at 20 °C by positioning one nozzle pack consisting of 52 tips with a needle size of 25G and a collector roller at an interval of 15 cm, adding the solution for forming an organic-inorganic composite layer to the tips, and applying a voltage of 40 to 90 kV. Here, the roll speed of the collector roller was set to 25 cm/min, and the flow rate of the solution for forming an organic-inorganic composite layer ejected from the tips was set to 1 mL/min.

The thickness of the layer including nanofibers was adjusted through hot pressing using a calender. Afterward, a positive electrode for a rechargeable lithium battery was manufactured by forming an organic-inorganic composite layer (thickness: 8 µm) with a fibrous network structure including PVDF, PAN, and methacrylate group-crosslinked PSSQ on the positive electrode active material layer and performing thermal treatment for crosslinking at 70 °C for 30 minutes.

### Example 2

A positive electrode was manufactured in the same manner as in Example 1, except that thermal treatment for crosslinking was performed at 140 °C for 30 minutes.

### Example 3

A positive electrode was manufactured in the same manner as in Example 1, except that 30 parts by weight of PSSQ with crosslinkable functional groups was included.

### Comparative Example 1

A positive electrode was manufactured in the same manner as in Example 1, except that PSSQ with crosslinkable functional groups was not included in the electrospinning solution.

### Comparative Example 2

A positive electrode was manufactured in the same manner as in Example 1, except that thermal treatment for crosslinking was not performed at 70 °C for 30 minutes.

### Comparative Example 3

A fibrous membrane was first formed by electrospinning an electrospinning solution without PSSQ having a crosslinkable functional group (PSSQ only with a phenyl group as a substituent for silicon). Subsequently, a composite layer including PSSQ was formed by spinning the PSSQ solution onto the fibrous membrane previously electrospun. A positive electrode was manufactured in the same manner as in Example 1, except that the spinning solution was divided and spun twice.

The physical properties of the organic-inorganic composite layers prepared in Examples and Comparative Examples were evaluated as follows, and the results are shown in Table 1 below.
(1) Tensile strength (units: kgf/cm²): An organic-inorganic composite positive electrode was manufactured of each of the compositions of the examples and the comparative examples. Subsequently, after cutting the positive electrode into five rectangular pieces each having a size of 10 mm (width (MD)) × 25 mm (length (TD)), each sample was mounted on a universal testing machine (UTM) so that the measuring length was 40 mm, and then the sample was pulled to measure the average tensile strength in the MD.
(2) Air permeability (units: sec/100cc): Air permeability was evaluated by measuring the time (units: sec) required for 100 cc air to pass through the organic-inorganic composite layer using a measurement device (EG01-55-1MR, Asahi Seiko).

### [Air permeability measurement device setting conditions]

Measurement pressure: 0.5 kg/cm², Cylinder pressure: 2.5 kg/cm², set time: 10 sec

**[Table 1]**

| | Example 1 | Example 2 | Example 3 | Comparative Example 1 | Comparative Example2 | Comparative Example3 |
|---|---|---|---|---|---|---|
| Tensile strength | 472 | 684 | 660 | 200 | 285 | 211 |
| Air permeability | 102 | 74 | 115 | 58 | 77 | 141 |
| Thickness | 8 | 8 | 8 | 8 | 8 | - |

As shown in Table 1, it can be seen that the organic-inorganic composite layers of Examples exhibit greatly improved tensile strength compared to those of Comparative Examples. This is because the strength is improved due to homogeneous distribution and crosslinking of PSSQ in the polymer fibers. In Comparative Example 3, it can be seen that when PSSQ is electrospun separately, air permeability increases without any improvement in strength.

### Example 4

As a negative electrode active material, a negative electrode slurry was prepared by mixing 97.5 wt% of artificial graphite, 1.0 wt% carboxymethyl cellulose, and 1.5 wt% of styrene butadiene rubber in distilled water as a solvent. The negative electrode slurry was applied to copper foil, dried, and rolled to form a negative electrode active material layer.

A mixture was prepared by mixing 60 parts by weight of PVDF and 40 parts by weight of PAN, 10 parts by weight of PSSQ with a crosslinkable functional group (PSSQ with a phenyl group and an epoxy group) and 3 parts by weight of a metharamid-based polymer (MA; having a unit of the following chemical formula, Nomax^{®}) were mixed with respect to 100 parts by weight of the prepared mixture, 1 part by weight of an initiator (boronate-based) was added and dimethylacetamide was added as a solvent to disperse, thereby preparing an electrospinning solution.

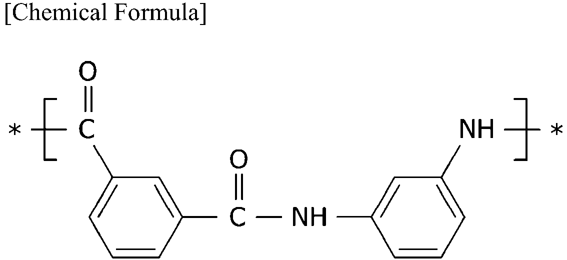

A layer including nanofibers (average diameter: 90 nm) was formed by electrospinning the electrospinning solution on the negative electrode active material layer. The electrospinning process was performed as follows:
The electrospinning was performed at 20 °C by positioning one nozzle pack consisting of 40 tips with a needle size of 25G and a collector roller at an interval of 15 cm, adding the solution for forming an organic-inorganic composite layer to the tips, and applying a voltage of 40 to 90 kV. Here, the roll speed of the collector roller was set to 35 cm/min, and the initial flow rate of the solution for forming an organic-inorganic composite layer ejected from the tips was set to 1 mL/min. After electrospinning, drying was performed with 70 °C hot air.

The layer including nanofibers was pressed using a hot calender heated to 90 °C. The roll speed was 20 cm/min. A negative electrode for a rechargeable lithium battery in which an organic-inorganic composite layer (thickness: 8 µm) having a network-like structure of fibers including PVDF, PAN, an aramid-based polymer, and epoxy group-crosslinked PSSQ was formed on the negative electrode active material layer was manufactured.

### Examples 5 and 6

Negative electrodes were manufactured in the same manner as in Example 4, except that the contents of PSSQ and aramid-based polymers were changed as shown in Table 2 below.

### Comparative Example 4

A negative electrode for a rechargeable lithium battery was manufactured in the same manner as in Example 4, except that PSSQ and aramid-based polymers were not included in the electrospinning solution.

### Comparative Example 5

An negative electrode for a rechargeable lithium battery was manufactured in the same manner as in Example 4, except that PSSQ was not included in the electrospinning solution.

### Comparative Example 6

A negative electrode for a rechargeable lithium battery was manufactured in the same manner as in Example 4, except that PSSQ without a crosslinkable functional group (PSSQ only with a phenyl group as a substituent of silicon) was included in an electrospinning solution, instead of PSSQ with a crosslinkable functional group.

The physical properties of the organic-inorganic composite layers prepared in Examples and Comparative Examples were evaluated as follows, and the results are shown in Table 2 below.
(1) Tensile strength (units: kgf/cm²): An organic-inorganic composite negative electrode was manufactured of the composition of each of the examples and the comparative examples. Subsequently, after cutting the negative electrode into five rectangular pieces each having a size of 10 mm (width (MD)) × 25 mm (length (TD)), each sample was mounted on a universal testing machine (UTM) so that the measuring length was 40 mm, and then the sample was pulled to measure the average tensile strength in the MD.
(2) Dry adhesion (units: gf/mm): A sample of each of the examples and the comparative examples was cut to 25 mm in width and 80 mm in length. Subsequently, a negative electrode active material layer was fixed to the upper grip and an organic-inorganic composite layer was fixed to the lower grip, and these electrodes were stretched and peeled using an UTM. Here, the speed was 100 mm/min. Dry adhesion was measured three times to obtain the average value.
(3) Electrolyte wetting rate (units: mm²/s): The prepared sample was cut to 40 mm in width and 70 mm in length. Afterward, 15 µL of an electrolyte (1.5M LiPF6 dissolved in ethylene carbonate, ethyl methyl carbonate, and dimethyl carbonate (volume ratio of 30:50:20)) was dropped from a height of 1 cm onto the specimen. After 30 seconds, the wetting rate was measured by measuring the distance over which the electrolyte spreads from the center.

**[Table 2]**

| | Example 4 | Example 5 | Example 6 | Comparative Example 4 | Comparative Example 5 | Comparative Example 6 |
|---|---|---|---|---|---|---|
| PSSQ : MA (parts by weight) | 10 : 3 | 5:3 | 10 : 1 | 0:0 | 0 : 10 | 10* : 3 |
| Tensile strength | 1531 | 1447 | 910 | 626 | 1198 | 987 |
| Dry adhesion | 1.32 | 0.84 | 1.18 | 0.62 | 0.76 | 0.89 |
| Electrolyte wetting rate | 5.5 | 5.3 | 5.4 | 5.0 | 5.1 | 5.3 |

As shown in Table 2, it can be confirmed that the organic-inorganic composite layer of each Example has excellent tensile strength, excellent dry adhesion, and an excellent electrolyte wetting rate. According to Comparative Example 6, it can be seen that epoxy-contained PSSQ has improved adhesion but insufficient strength.

For Comparative Example 5, it can be confirmed that aramid enhances the strength but adhesion was weak. In the examples, combining PSSQ and aramid not only provides high adhesion but also improves strength compared to aramid alone. Moreover, this combination also improves the electrode wetting rate. This can contribute to improving cell performance by improving electrolyte impregnation when applied to rechargeable batteries.

### Example 7

As a negative electrode active material, a negative electrode slurry was prepared by mixing 97.5 wt% of artificial graphite, 1.0 wt% of carboxymethyl cellulose, and 1.5 wt% of styrene butadiene rubber in distilled water as a solvent. The negative electrode slurry was applied to copper foil, dried, and rolled to form a negative electrode active material layer.

A mixture was prepared by mixing 60 parts by weight of PVDF and 40 parts by weight of PAN, and an electrospinning solution was prepared by mixing 20 parts by weight of PSSQ (PSSQ with a phenyl group and crosslinkable functional groups (in Chemical Formula 4, R⁷ is a n-propylene group, and R⁸ is methylene group)) with respect to 100 parts by weight of the mixture, mixing 0.5 parts by weight of a borate-based initiator with respect to 100 parts by weight of the PSSQ, and then dissolving the resulting mixture in dimethylacetamide as a solvent.

A layer including nanofibers (average diameter: 90 nm) was formed by electrospinning the electrospinning solution onto the negative electrode active material layer. The electrospinning process was performed as follows:
The electrospinning was performed under conditions of 26 °C and 50% relative humidity by positioning one nozzle pack consisting of 52 tips with a needle size of 25G and a collector roller at an interval of 15 cm, adding the electrospinning solution to the tips, and applying a voltage of 40 to 90 kV. Here, the roll speed of the collector roller was 1 to 3 m/min, and the flow rate of the solution for forming an organic-inorganic composite layer ejected from the tips was set to 150 µL/min. After electrospinning, drying was performed using 90 °C hot air.

The layer including nanofibers was hot-pressed at 70 °C and a pressure of 0.3 MPa, and thermal treatment for crosslinking was performed at 140 °C in a vacuum for 3 hours, thereby manufacturing an integrated negative electrode for a rechargeable lithium battery in which an organic-inorganic composite layer (thickness: 8 µm) having a network-like structure of nanofibers including PVDF, PAN, and crosslinkable functional group- crosslinked PSSQ having a phenyl group is formed on the negative electrode active material layer.

The prepared nanofibers were confirmed to be sea-island fibers, as shown in the results of FIGS. 7 to 10.

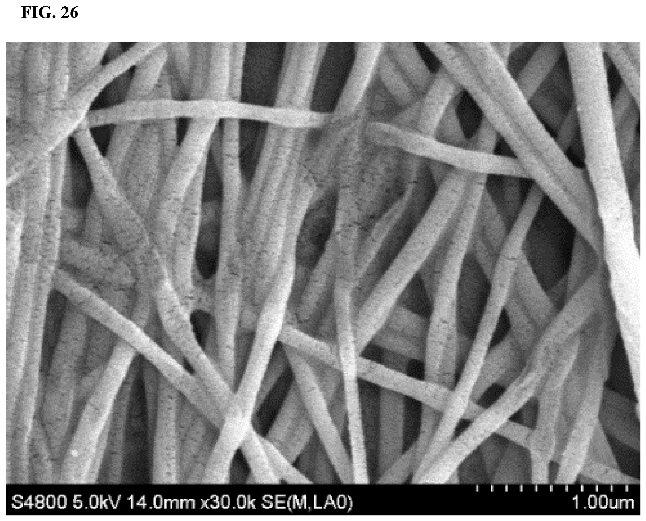

The prepared organic-inorganic composite layer was hot-pressed, and then the SEM results are shown in FIG. 26. Referring to FIG. 26, it can be seen that the organic-inorganic composite layer has a fused part due to crosslinking of the epoxy group of PSSQ. Cracks are observed on the fiber surface due to the crosslinking, and the fibers were found to maintain their round cross-sectional shape.

### Example 8

A negative electrode was manufactured in the same manner as in Example 7, except that 10 parts by weight of PSSQ was included with respect to 100 parts by weight of the mixture of PVDF and PAN.

### Example 9

A negative electrode was manufactured in the same manner as in Example 7, except that 30 parts by weight of PSSQ was included with respect to 100 parts by weight of the mixture of PVDF and PAN .

### Example 10

A negative electrode was manufactured in the same manner as in Example 7, except that 10 parts by weight of PSSQ (PSSQ with a phenyl group and without a crosslinkable functional group) was included with respect to 100 parts by weight of the mixture of PVDF and PAN.

### Comparative Example 7

A negative electrode was manufactured in the same manner as in Example 7, except that PSSQ was not included in the electrospinning solution.

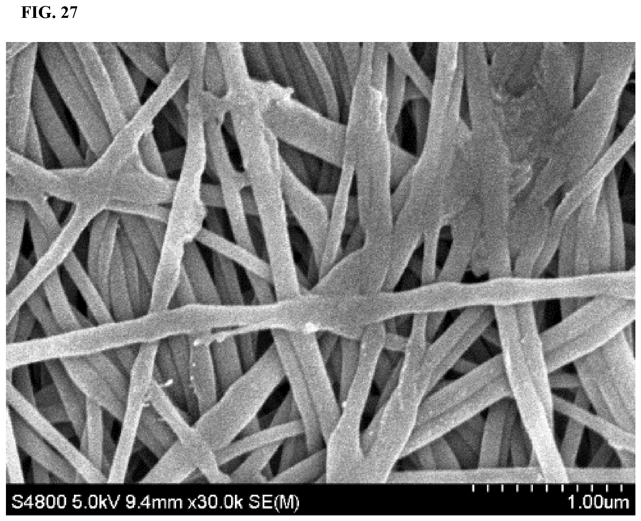

The organic-inorganic composite layer was hot-pressed, and then the SEM results are shown in FIG. 27. Referring to FIG. 27, it can be confirmed that the fibers have a compressed shape.

### Comparative Example 8

A negative electrode was manufactured in the same manner as in Example 7, except that PVDF was not included in the electrospinning solution.

### Comparative Example 9

A negative electrode was manufactured in the same manner as in Example 7, except that PAN was not included in the electrospinning solution.

### Comparative Example 10

A separator in which a heat-resistant layer containing boehmite and an acrylic binder and an adhesive layer containing a PVDF adhesive binder were sequentially laminated onto one surface of a polyethylene membrane was purchased. A negative electrode was manufactured by laminating the separator to the negative electrode active material layer formed in the same manner as in Example 7.

### Comparative Example 11

A negative electrode was manufactured in the same manner as in Example 7, except that PAA was included in the electrospinning solution, instead of PAN.

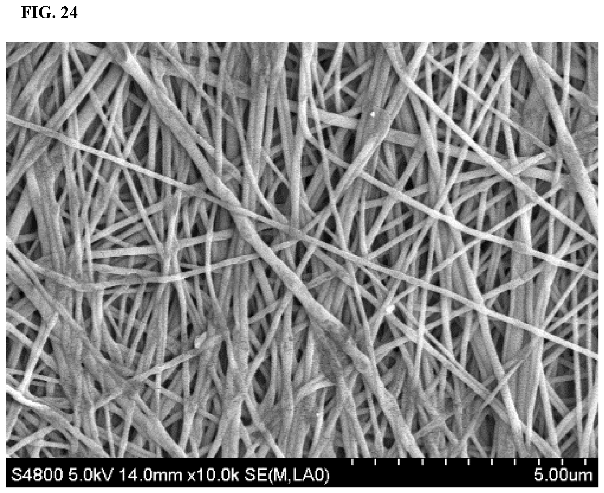

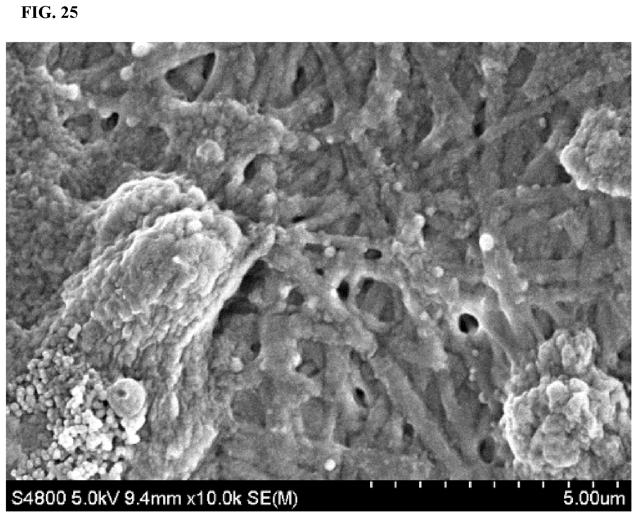

The physical properties of the organic-inorganic composite layers and/or separators formed in the examples and the comparative examples were evaluated. The results are shown in Table 3 below and FIGS. 24 and 25.

### (1) Tensile strength (units: kgf/cm²):

After preparing a specimen with a width of 1 cm and a length of 8 cm, it was attached to jigs, and the distance between the jigs (specimen length) was set to 2 cm, followed by a tensile test at a speed of 10 cm/min. The tensile strength was calculated by dividing the force at the specimen fracture point by the cross-sectional area of the specimen in a raw state (engineering strength). Measurement was performed three times for each specimen to obtain the average value.

(2) Electrolyte wettability (units: mm²/s): 15 µL of electrolyte was dropped from a height of 1 cm onto the electrospun fibrous layer or separator, and the wetting rate was calculated from the area over which the electrolyte spreads for 30 seconds.

### (3) Shutdown effect:

After detaching the electrospun membrane with a size of 5 cm × 5 cm, prepared in each of the examples and comparative examples, from a negative electrode, it was attached onto a positive electrode through hot pressing, and the resulting sample was sealed together with an electrolyte inside a pouch and left at 150 °C for 1 hour. The surface of an organic-inorganic composite layer of the sample was observed by SEM to evaluate whether the pores were blocked. When the pores were blocked, it was evaluated as exhibiting a shutdown effect.

When 50% or more of the pores in the separator were blocked, it was evaluated as ∘, and when less than 50% of the pores in the separator were blocked, it was evaluated as X.

### (4) Adhesion (units: gf/mm):

### (4-1) Dry adhesion

The electrode prepared in each of the examples and the comparative examples was cut to a size of 2.5 cm × 8 cm to prepare a sample. In the sample, after separating the organic-inorganic composite layer from the negative electrode active material layer approximately 10 to 20 mm, the organic-inorganic composite layer was fixed to the upper grip and the negative electrode active material layer was fixed to the lower grip so that the distance between the grips was 20 mm, followed by peeling by pulling the sample in the 180° direction. The peeling speed was 20 mm/min, and after the start of peeling, the force required to peel 40 mm was measured three times to obtain the average value. It was determined as the average value of the measured values. Adhesion was measured using a UTM.

### (4-2) Wet adhesion

The electrode prepared in each of the examples and the comparative examples was cut to a size of 2.5 cm × 8 cm to prepare a sample. The prepared sample was put into a pouch. 2.5 g of a mixed solvent of ethylene carbonate and ethyl methyl carbonate (a volume ratio of 50:50) containing dissolved LiPF₆ as an electrolyte was injected, sealed, and the resulting product was left at 25 °C for 24 hours. Subsequently, the resulting sample was left in a 50 °C chamber under a pressure of 200 kgf for 2 hours. In the sample, after separating the organic-inorganic composite layer from the negative electrode active material layer by approximately 10 to 20 mm, the organic-inorganic composite layer was fixed to the upper grip, the negative electrode active material layer was fixed to the lower grip so that the distance between the grips was 20 mm, followed by peeling by pulling the sample in the 180° direction. The peeling speed was 20 mm/min, and after the start of peeling, the force required to peel 40 mm was measured three times to obtain the average value. It was determined as the average value of the measured values. Adhesion was measured using a UTM.

(5) Electrolyte thermal shrinkage rate (units: %): The electrode (including an organic-inorganic composite layer, a negative electrode active material layer, and copper foil) prepared in each of the examples and the comparative examples was cut to a size of 5 cm × 5 cm to prepare a sample. After detaching the sample from a negative electrode, the sample was hot-pressed onto a positive electrode to seal together with an electrolyte in a pouch, and then left for 24 hours to allow the electrolyte to sufficiently impregnate the electrospun membrane. After leaving the resulting pouch in an oven at 150 °C for 1 hour, the sample was taken from the pouch to measure how much the size was reduced compared to the initial size (5 cm × 5 cm) in the MD and the TD, thereby calculating a thermal shrinkage rate. The thermal shrinkage rate was calculated by Mathematical Expression 1 below. [Mathematical expression 1] $Thermal shrinkage rate = \left(L0-L1\right) / L 0 \times 100$
(L0 is the initial length of an organic-inorganic composite layer (5 cm), and
L1 is the length of an organic-inorganic composite layer after leaving it at 150 °C for 1 hour.)

**[Table 3]**

| | Example | | | | Comparative Example | | | | |
|---|---|---|---|---|---|---|---|---|---|
| | 7 | 8 | 9 | 10 | 7 | 8 | 9 | 10 | 11 |
| Tensile strength | 1200 | 1100 | 800 | 600 | 600 | 500 | 500 | 1800 | 600 |
| Electrolyte wettability | 7.7 | 9.0 | 5.0 | 7.5 | 7.5 | 8.5 | 6.0 | 3.8 | 8.5 |
| Shutdown effect | ○ | ○ | ○ | ○ | ○ | × | ○ | ○ | × |
| Dry adhesion | 1.2 | 1.1 | 1.5 | 0.7 | 0.7 | 0.2 | 1.5 | 1.1 | 0.2 |
| Wet adhesion | 1.8 | 1.7 | 2.0 | 0.65 | 0.65 | 0.2 | 2.0 | 0.7 | 0.2 |
| Electrolyte thermal shrinkage rate (MD/TD) | 0/0 | 0/0 | 0/0 | 40/45 | Immeasurable | 0/0 | 0/0 | 14/20 | 0/0 |

As shown in Table 3, the organic-inorganic composite layers of the examples have improved tensile strength, improved electrode wettability, an improved shutdown effect, and improved adhesion to the active material layer and heat resistance.

### Example 11

### Preparation of first electrospinning solution

A mixture was prepared by mixing 60 parts by weight of PVDF and 40 parts by weight of PAN, and an electrospinning solution was prepared by mixing PSSQ (PSSQ having a phenyl group and crosslinkable functional groups (in Chemical Formula 4, R⁷ is a n-propylene group, and R⁸ is a methylene group)) so that its content in the fibers is 10 wt% with the mixture, mixing 0.5 parts by weight of a borate-based initiator with respect to 100 parts by weight of the PSSQ, and dissolving the resulting mixture in dimethylacetamide as a solvent.

### Preparation of second electrospinning solution

A mixture was prepared by mixing 60 parts by weight of PVDF and 40 parts by weight of PAN, and an electrospinning solution was prepared by mixing PSSQ (PSSQ having a phenyl group and crosslinkable functional groups (in Chemical Formula 4, R⁷ is a n-propylene group, and R⁸ is a methylene group)) with the mixture so that its content in the fibers was 20 wt%, mixing 0.5 parts by weight of a borate-based initiator with respect to 100 parts by weight of the PSSQ, and dissolving the resulting mixture in dimethylacetamide as a solvent.

### Manufacture of electrode

As a negative electrode active material, a negative electrode slurry was prepared by mixing 97.5 wt% of artificial graphite, 1.0 wt% carboxymethyl cellulose, and 1.5 wt% of styrene butadiene rubber in distilled water as a solvent. The negative electrode slurry was applied to copper foil, dried, and rolled to form a negative electrode active material layer.

As a positive electrode active material, a positive electrode slurry was prepared by mixing 97.5 wt% of lithium-cobalt oxide, 1.0 wt% of carboxymethyl cellulose, and 1.5 wt% of PVDF in the solvent, N-methyl-2-pyrrolidone. The positive electrode slurry was applied to aluminum foil, dried, and rolled to form a positive electrode active material layer.

An electrode assembly, in which a negative electrode active material layer, a second organic-inorganic composite layer, a first organic-inorganic composite layer, a second organic-inorganic composite layer, a first organic-inorganic composite layer, and a positive electrode active material layer were sequentially stacked, was manufactured by alternately electrospinning the prepared second electrospinning solution and first electrospinning solution onto the negative electrode active material layer, drying it in a drier at 90 °C, hot-pressing it at 70 °C and 0.3 MPa, thermally treating it for crosslinking at 140 °C in a vacuum for 180 minutes, and laminating the prepared positive electrode active material layer. The difference in PSSQ content between the first organic-inorganic composite layer and the second organic-inorganic composite layer was 10 wt%. The electrode assembly includes a total of 4 organic-inorganic composite layers having a thickness of 7 to 8 µm.

The electrospinning process was performed by the following method: The electrospinning was performed under conditions of 26 °C and 50% relative humidity by positioning one nozzle pack consisting of 40 tips with a needle size of 25G and a collector roller at an interval of 15 cm, adding the solution for forming an organic-inorganic composite layer to the tips, and applying a voltage of 40 to 90 kV. Here, the roll speed of the collector roller was set to 1 to 3 m/min, and the flow rate of the electrospinning solution ejected from the tips was set to 150 µL/min. After electrospinning, drying was performed using 90 °C hot air.

### Example 12

An electrode assembly was manufactured in the same manner as in Example 11, except that a total of 6 organic-inorganic composite layers was formed by alternately stacking a first organic-inorganic composite layer and a second organic-inorganic composite layer. The thickness of the 6 organic-inorganic composite layers was 7 to 8 µm.

### Example 13

An electrode assembly was manufactured in the same manner as in Example 11, except that a total of 8 organic-inorganic composite layers was formed by alternately stacking a first organic-inorganic composite layer and a second organic-inorganic composite layer. The thickness of the 8 organic-inorganic composite layers was 7 to 8 µm.

### Example 14

An electrode assembly was manufactured in the same manner as in Example 11, except that the difference in PSSQ content between the first organic-inorganic composite layer (PSSQ 10 wt%) and the second organic-inorganic composite layer (PSSQ 40 wt%) was changed to 30 wt%. The thickness of the 4 organic-inorganic composite layers was 7 to 8 µm.

### Comparative Example 12

### Preparation of first electrospinning solution

A mixture was prepared by mixing 60 parts by weight of PVDF and 40 parts by weight of PAN, and an electrospinning solution was prepared by mixing PSSQ (PSSQ having a phenyl group and crosslinkable functional groups (in Chemical Formula 4, R⁷ is a n-propylene group, and R⁸ is a methylene group)) with the mixture so that its content in the fibers was 10 wt%, mixing 0.5 parts by weight of a borate-based initiator with respect to 100 parts by weight of the PSSQ, and dissolving the resulting mixture in dimethylacetamide as a solvent.

### Preparation of second electrospinning solution

A mixture was prepared by mixing 60 parts by weight of PVDF and 40 parts by weight of PAN, and an electrospinning solution was prepared by mixing PSSQ (PSSQ having a phenyl group and crosslinkable functional groups (in Chemical Formula 4, R⁷ is a n-propylene group, and R⁸ is a methylene group)) with the mixture so that its content in the fibers was 15 wt%, mixing 0.5 parts by weight of a borate-based initiator with respect to 100 parts by weight of the PSSQ, and dissolving the resulting mixture in dimethylacetamide as a solvent.

An electrode assembly was manufactured in the same manner as in Example 11 using the first electrospinning solution and second electrospinning solution. The difference in PSSQ content between the first organic-inorganic composite layer and the second organic-inorganic composite layer was 5 wt%. The electrode assembly included a total of 4 organic-inorganic composite layers, and the thickness of the 4 organic-inorganic composite layers was 7 to 8 µm.

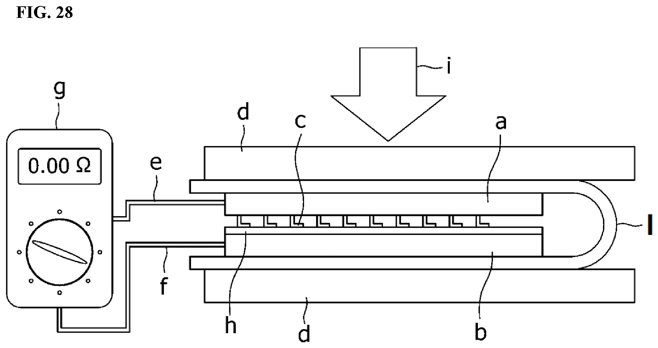

The physical properties of the multilayer organic-inorganic composite layers and the electrode assemblies manufactured in the examples and the comparative examples were evaluated.
(1) Short-circuit strength (units: N) after injecting foreign substances: After preparing the following specimen, the short-circuit strength was measured using the compression mode of an Instron universal testing machine. When the electrode assemblies of the examples and the comparative examples were manufactured, 10 foreign substances c were injected at regular intervals between the negative electrode b containing the negative electrode active material layer and the multilayer organic-inorganic composite layer h, and the positive electrode a containing the positive electrode active material layer. The foreign substances were structures manufactured of stainless steel and having an 'L' shaped cross-section with a horizontal length of 1000 µm, a vertical length of 1000 µm, and a thickness of 100 µm. The positive electrode a, the negative electrode b, the multilayer organic-inorganic composite layer h, and the foreign substances c were inserted in a pouch I, and the pouch I was placed between iron plates d. Afterward, a positive electrode tab e and a negative electrode tab f were connected to the positive electrode a and the negative electrode b, respectively, to manufacture a specimen with the cross-section shown in FIG. 28. The positive electrode tab and the negative electrode tab were then connected to a multimeter g, the specimen was placed on a flat lower iron plate placed on the Instron lower jig, and the pouch was compressed i by the upper jig having an Instron load cell connected to one side. The compression force (N) was measured when the multilayer organic-inorganic composite layer h fractured due to the foreign substances c and resistance was detected by the multimeter due to the contact between the positive and negative electrodes. The short-circuit strength for foreign substances compression is for example 200N or more. Within the above range, cell safety against foreign substances can be increased when an actual cell is made.
(2) Air permeability (units: sec/100cc): Air permeability was evaluated by measuring the time (units: sec) required for 100 cc air to pass through the organic-inorganic composite layer using a measurement device (EG01-55-1MR, Asahi Seiko).

### [Air permeability measurement device setting conditions]

Measurement pressure: 0.5 kg/cm², Cylinder pressure: 2.5 kg/cm², and Set time: 10 sec

**[Table 4]**

| | Example | | | | Comparative Example |
|---|---|---|---|---|---|
| | 11 | 12 | 13 | 14 | 12 |
| Number of layers in multilayer organic-inorganic composite layer | 4 | 6 | 8 | 4 | 4 |
| Difference in PSSQ content | 10 | 10 | 10 | 30 | 5 |
| Short circuit strength | 200 | 143 | 141 | 200 | 99 |
| Air permeability | 60 | 55 | 50 | 150 | 35 |

As shown in Table 4, the organic-inorganic composite layers of the examples provided improved air permeability, and the electrode assemblies of the examples provided high stability against foreign substances.

However, the organic-inorganic composite layer of Comparative Example 12 showed low short-circuit strength and air permeability values.

### Reference 1

An electrospinning solution and a positive electrode active material layer were prepared in the same manner as the first electrospinning solution of Example 11. The prepared electrospinning solution was electrospun onto the positive electrode active material layer in the same manner as in Example 11, subjected to pre-thermal treatment, thermal treatment, and hot-pressing, thereby forming an organic-inorganic composite layer including 60 parts by weight of PVDF, 40 parts by weight of PAN, and 20 parts by weight of PSSQ, and nanofibers in which the crosslinkable functional groups of PSSQ are crosslinked on the positive electrode active material layer.

The results shown in FIGS. 16 and 17 confirm that the prepared nanofibers are sea-island fibers.

### Reference 2

An organic-inorganic composite layer was formed in the same manner as in Reference 1, except that 60 parts by weight of PVDF and 40 parts by weight of PAN were included without PSSQ.

It was confirmed that the prepared nanofibers were not sea-island fibers.

The following physical properties of the organic-inorganic composite layers and electrodes prepared in References 1 and 2 were evaluated.
(1) Tensile strength (units: kgf/cm²): After preparing a specimen with a width of 1 cm and a length of 8 cm, it was attached to jigs, and the distance between the jigs (specimen length) is set to 2 cm, followed by a tensile test at a speed of 10 cm/min. The tensile strength was calculated by dividing the force at the specimen fracture point by the cross-sectional area of the specimen in a raw state (engineering strength). Measurement was performed three times for each specimen to obtain the average value.
(2) Electrolyte wettability (units: mm²/s): 15 µL of electrolyte was dropped from a height of 1 cm onto the electrospun fibrous layer or separator, and the wetting rate was calculated from the area covered by the electrolyte after 30 seconds .
(3) Shutdown effect:
   After detaching the electrospun membrane with a size of 5 cm × 5 cm, prepared in each of References 1 and 2, from a positive electrode, it was attached onto a negative electrode through hot pressing, and the resulting sample was sealed together with an electrolyte inside a pouch and left at 150 °C for 1 hour. The surface of an organic-inorganic composite layer of the sample was observed by a SEM to evaluate whether the pores were blocked. When the pores were blocked, it was evaluated as exhibiting a shutdown effect.
(4) Adhesion (units: gf/mm):
   (4-1) Dry adhesion

The electrode prepared in each of References 1 and 2 was cut to a size of 2.5 cm × 8 cm to prepare a sample. In the sample, after separating an organic-inorganic composite layer from a positive electrode active material layer by approximately 10 to 20 mm, the organic-inorganic composite layer was fixed to the upper grip and the positive electrode active material layer was fixed to the lower grip so that the distance between the grips was 20 mm, followed by peeling by pulling the sample in the 180° direction. The peeling speed was 20 mm/min, and after the start of peeling, the force required to peel 40 mm was measured three times to obtain the average value. It was determined as the average value of the measured values. Adhesion was measured using a UTM.

### (4-2) Wet adhesion

The electrode prepared in each of References 1 and 2 was cut to a size of 2.5 cm × 8 cm to prepare a sample. The prepared sample was put into a pouch. After injecting 2.5 g of a mixed solvent of ethylene carbonate and ethyl methyl carbonate (a volume ratio of 50:50) containing dissolved LiPF₆ as an electrolyte, the pouch was sealed and left at 25 °C for 24 hours. Subsequently, the resulting sample was left in a 50 °C chamber under a pressure of 200 kgf for 2 hours. In the sample, after separating the organic-inorganic composite layer from the positive electrode active material layer by approximately 10 to 20 mm, the organic-inorganic composite layer was fixed to the upper grip, the positive electrode active material layer was fixed to the lower grip so that the distance between the grips was 20 mm, followed by peeling by pulling the sample in the 180° direction. The peeling speed was 20 mm/min, and after the start of peeling, the force required to peel 40 mm was measured three times to obtain the average value. It was determined as the average value of the measured values. Adhesion was measured using a UTM.

(5) Electrolyte thermal shrinkage rate (units: %): The electrode (including an organic-inorganic composite layer, a positive electrode active material layer, and aluminum foil) prepared in each of References 1 and 2 was cut to a size of 5 cm × 5 cm to prepare a sample. After detaching the sample from a positive electrode, the sample was hot-pressed onto a negative electrode to seal together with an electrolyte in a pouch, and then left for 24 hours to allow the electrolyte to sufficiently impregnate the electrospun membrane. After leaving the resulting pouch in an oven at 150 °C for 1 hour, the sample was taken from the pouch to measure how much the size was reduced compared to the initial size (5 cm × 5 cm) in the MD and the TD, thereby calculating a thermal shrinkage rate. The thermal shrinkage rate was calculated by Mathematical Expression 1 below. [Mathematical expression 1] $Thermal shrinkage rate = \left(L0-L1\right) / L 0 \times 100$
(L0 is the initial length of an organic-inorganic composite layer (5 cm), and
L1 is the length of an organic-inorganic composite layer after leaving it at 150 °C for 1 hour.)

**[Table 5]**

| | Reference 1 | Reference 2 |
|---|---|---|
| Tensile strength | 1200 | 600 |
| Electrolyte wetting rate | 7.7 | 7.5 |
| Shutdown effect | presence | No presence |
| Dry adhesion to positive electrode | 1.2 | 0.7 |
| Wet adhesion to positive electrode | 1.8 | 0.65 |
| Electrolyte thermal shrinkage rate (MD/TD) | 0/0 | Immeasurable |

As shown in Table 5, it can be seen that the organic-inorganic composite layer of Reference 1 provided favorable effects in terms of tensile strength, electrolyte wetting rate, dry adhesion, wet adhesion, and shrinkage rate, and also provided a shutdown effect. Therefore, it can be expected that the multilayer organic-inorganic composite layers of the examples also provide favorable effects in terms of tensile strength, electrolyte wetting rate, dry adhesion, wet adhesion, and shrinkage rate, and also provide a shutdown effect.

Although the preferred example embodiments of the present disclosure have been described above, the present disclosure is not limited thereto, and it is possible to implement various modifications within the scope of the claims, the detailed description of the present disclosure, and the accompanying drawings. It is obvious that these modifications also fall within the scope of the present disclosure.

## Claims

1. An electrode for a rechargeable lithium battery (100), comprising:
an active material layer for a rechargeable lithium battery (100); and
an organic-inorganic composite layer integrated with the active material layer,
wherein the organic-inorganic composite layer comprises fibers containing a polyvinylidene fluoride (PVDF)-based polymer, a polyacrylonitrile (PAN)-based polymer, and poly(silsesquioxane) (PSSQ).

2. The electrode of claim 1, wherein the fibers are sea-island fibers, and preferably wherein the sea-island fiber has a sea region consisting of the PVDF-based polymer and island regions with a core-shell structure which has a core consisting of the PAN-based polymer and a shell surrounding the core and consisting of the PSSQ.

3. The electrode of claim 2, wherein, in the sea-island fiber, the island regions are randomly disposed in the sea region, and/or wherein the area ratio of the island regions in the cross-section of the sea-island fiber is 30 to 50%.

4. The electrode according to any one of claims 1 to 3, wherein the PSSQ has a substituted or unsubstituted aromatic group.

5. The electrode according to any one of claims 1 to 4, wherein the PSSQ has crosslinkable functional groups, and preferably wherein at least some of the crosslinkable functional groups in the fibers are crosslinked with each other, and/or wherein the crosslinkable functional group comprises one or more of an epoxy group, a glycidyl group, and a glycidoxyalkyl group.

6. The electrode according to any one of claims 1 to 5, wherein the PSSQ comprises a random type, a ladder type, a cage type, or a partial cage type.

7. The electrode according to any one of claims 1 to 6, wherein the PSSQ is a ladder type and represented by at least one unit of Chemical Formula 8 below: 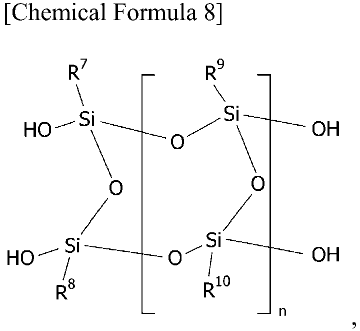 wherein in Chemical Formula 8,
R⁷, R⁸, R⁹, and R¹⁰ are each independently hydrogen, a hydroxyl group, a C1 to C20 alkyl group, a C2 to C20 alkenyl group, a C2 to C20 alkynyl group, a C3 to C20 cycloalkyl group, a C6 to C20 aryl group, a C7 to C20 arylalkyl group, a crosslinkable functional group, or a combination thereof,
at least one of R⁷, R⁸, R⁹, and R¹⁰ comprises a crosslinkable functional group, and
n is the number of moles of the unit; and preferably wherein, in Chemical Formula 8, R⁷, R⁸, R⁹, and R¹⁰ are each independently a phenyl group, an epoxy group, a glycidyl group, a glycidoxy group, or a glycidoxyalkyl group, and at least one of R⁷, R⁸, R⁹, and R¹⁰ comprises an epoxy group, a glycidyl group, a glycidoxy group, or a glycidoxyalkyl group.

8. The electrode according to any one of claims 1 to 7, wherein the PVDF-based polymer and the PAN-based polymer are included in a range of 50 to 90 parts by weight:10 to 50 parts by weight with respect to 100 parts by weight of a total of the PVDF-based polymer and the PAN-based polymer, and/or wherein the PSSQ is included in a range of 5 to 50 parts by weight with respect to 100 parts by weight of the total of the PVDF-based polymer and the PAN-based polymer.

9. The electrode according to any one of claims 1 to 8, wherein the active material layer for a rechargeable lithium battery (100) comprises a negative electrode active material layer.

10. A rechargeable lithium battery (100), comprising:
the electrode for a rechargeable lithium battery (100) according to any one of claims 1 to 9; and
an electrode for a rechargeable lithium battery (100) facing the electrode for a rechargeable lithium battery (100).

11. The rechargeable lithium battery (100) of claim 10, wherein the rechargeable lithium battery (100) has no separator.
